# EUROPÄISCHE PATENTSCHRIFT

(11) **EP 3 177 889 B1**
(45) Veröffentlichungstag und Bekanntmachung des Hinweises auf die Patenterteilung: **27.12.2017**
(21) Anmeldenummer: 15747092.3
(22) Anmeldetag: 15.07.2015
(51) Int. Cl.: G01B 11/04, G01B 11/245, G06T 7/00

(54) **VORRICHTUNG UND VERFAHREN ZUR VOLUMENBESTIMMUNG EINES DURCH EIN FLURFÖRDERZEUG BEWEGTEN OBJEKTS**
DEVICE AND METHOD FOR DETERMINING THE VOLUME OF AN OBJECT MOVED BY AN INDUSTRIAL TRUCK
DISPOSITIF ET PROCÉDÉ DE DÉTERMINATION DU VOLUME D'UN OBJET DÉPLACÉ PAR UN CHARIOT DE MANUTENTION AU SOL

(30) Priorität: 08.08.2014 DE 102014011821
(43) Veröffentlichungstag der Anmeldung: 14.06.2017
(73) Patentinhaber: Cargometer GmbH, 1100 Wien (AT)
(72) Erfinder: BAUMGARTNER, Michael, A-1060 Wien (AT)
(74) Vertreter: v. Bezold & Partner Patentanwälte - PartG mbB
(86) Internationale Anmeldenummer: PCT/EP2015/001452
(87) Internationale Veröffentlichungsnummer: WO 2016/020038

(56) Entgegenhaltungen:
- EP-A1- 2 439 487
- WO-A1-2005/022079
- WO-A1-2012/139575
- FENG LI ET AL: "A hybrid camera for motion deblurring and depth map super-resolution", COMPUTER VISION AND PATTERN RECOGNITION, 2008. CVPR 2008. IEEE CONFERENCE ON, IEEE, PISCATAWAY, NJ, USA, 23. Juni 2008 (2008-06-23), Seiten 1-8, XP031297132, ISBN: 978-1-4244-2242-5
- MIN KYU PARK ET AL: "Super-resolution image reconstruction: a technical overview", IEEE SIGNAL PROCESSING MAGAZINE, IEEE SERVICE CENTER, PISCATAWAY, NJ, US, Bd. 20, Nr. 3, Mai 2003 (2003-05), Seiten 21-36, XP011097476, ISSN: 1053-5888, DOI: 10.1109/MSP.2003.1203207

## Beschreibung

Die Erfindung betrifft eine Vorrichtung und ein Verfahren zur Volumenbestimmung eines durch ein Flurförderzeug bewegten Objekts.

Um in der Stückgutlogistik den benötigten Frachtraum möglichst genau ermitteln zu können, ist es erforderlich, das Frachtvolumen bzw. das Volumen einzelner Ladegüter zu bestimmen. Ein bekannter, jedoch ungenauer Ansatz ist, das Frachtvolumen einer Sendung anhand einer Gewichtsangabe über den Umweg einer durchschnittlichen Güterdichte zu schätzen. Aus dem Stand der Technik sind ferner Messsysteme bekannt, die ruhende und freistehende Messobjekte erfordern, was jedoch zu nachteiligen Verzögerungen und Unterbrechungen des Arbeitsflusses führt, da insbesondere in Logistik- bzw. Umschlagterminals das tägliche Frachtvolumen in kurzen Zeitfenstern ermittelt werden muss.

Es besteht daher ein Bedarf an einer Messvorrichtung, die eine Volumenbestimmung des Ladegutes ohne Unterbrechung und Umstellung der terminalinternen Logistikprozesse ermöglicht. Eine derartige Volumenmessvorrichtung für bewegte Objekte ist bereits aus der EP 2 439 487 B1 bekannt. Zur Erfassung der Kontur eines Ladeguts wird beispielsweise vorgeschlagen, vier als Laserscanner ausgebildete Konturerfassungssensoren einzusetzen, die jeweils das bewegte Ladegut zeilenweise bzw. schichtenweise beim Vorbeifahren scannen und die empfangenen Lichtstrahlen auf zeilenförmige Bildsensoren abbilden, so dass eine Ansicht auf das Ladegut in Form von nacheinander erfassten Streifenbildern ermittelt wird.

Ein derartiges zeilen- bzw. streifenbasiertes Laserscanverfahren erfordert jedoch, die einzelnen gescannten Streifenbilder des bewegten Ladeguts wieder in der richtigen Distanz, d.h. unter Berücksichtigung der Bewegung des Ladeguts, zusammenzusetzen, um eine Gesamtaußenkontur des Ladeguts und des Beförderungsmittels zu erhalten. Die erfassten Daten müssen somit aufwändig wieder unter Erkennung der Bewegung des Ladeguts zusammengesetzt werden, was kostenintensiv und fehleranfällig ist. Dies liegt daran, dass abhängig von der Aufnahmegeschwindigkeit des Sensors jede Bildzeile in sich leicht verzogen ist, da jeder Pixel bzw. Punkt der Zeile hintereinander aufgenommen wird. Die Verzerrung ist unterschiedlich bei unterschiedlichen bzw. schwankenden Ladegutgeschwindigkeiten und auch abhängig vom Abstand jedes Punktes vom Sensor. Bei gleicher Geschwindigkeit bewegen sich nahe Punkte weiter als ferne Punkte relativ zum Sensor. Für die Zusammensetzung eines Einzelbildes muss somit die Bewegung des Objekts erkannt und herausgerechnet werden. Hierfür ist ein hochgenauer Odometriesensor erforderlich, mittels dessen die Bestimmung der Bewegung erfolgt.

Ein weiterer Nachteil eines solchen streifenbasierten Laserscanverfahrens ist, dass derartige Laserscanner zwar eine vergleichsweise hohe Auflösung einer Kontur des Ladeguts ermöglichen, jedoch vergleichsweise teuer sind.

Eine weitere Vorrichtung zur Bestimmung der Abmessungen eines bewegten Ladeguts ist aus der US 7,757,946 B2 bekannt, die ähnliche Nachteile wie zuvor beschrieben aufweist. Die Patentschrift US 8,599,303 B2 beschreibt den Aufbau einer Time-of-Flight-Kamera, die zur optischen Erfassung der Abmessungen eines auf einem Förderband bewegten Objekts verwendet werden kann. Aus der US 6,798,528 B1 ist ferner ein System zur Bestimmung der Abmessungen eines bewegten Objektes bekannt, das zur Messung parabolische Spiegel verwendet. Nachteilig hieran ist der vergleichsweise aufwändige Aufbau und die aus dem Messansatz resultierende Schwierigkeit, unförmige Objekte genau vermessen zu können.

Es ist somit eine Aufgabe der Erfindung, eine verbesserte Vorrichtung und ein verbessertes Verfahren zur Volumenbestimmung eines durch ein Flurförderzeug bewegten Objekts bereitzustellen, mit denen Nachteile herkömmlicher Techniken vermieden werden können. Die Aufgabe der Erfindung ist es insbesondere, eine Vorrichtung zur Volumenbestimmung eines durch ein Flurförderzeug bewegten Objekts bereitzustellen, mit der eine zuverlässige Volumenbestimmung von bewegten Ladegütern ermöglicht wird, ohne bestehende terminalinterne Logistikprozesse verändern oder zur Volumenmessung unterbrechen zu müssen. Der Erfindung liegt ferner die Aufgabe zugrunde, eine Vorrichtung zur Volumenbestimmung eines durch ein Flurförderzeug bewegten Objekts bereitzustellen, die kostensparend und platzsparend im Bereich eines Verladeterminals, insbesondere im Bereich eines Ladetors eines Logistikterminals, angeordnet werden kann.

Diese Aufgaben werden durch eine Vorrichtung und durch ein Verfahren mit den Merkmalen der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße Vorrichtung zur Volumenbestimmung eines durch ein Flurförderzeug bewegten Objekts weist in Übereinstimmung mit dem Stand der Technik eine Sensoreinrichtung zur Erfassung einer Oberflächenform des Objekts auf sowie eine Volumenbestimmungseinrichtung, die ausgeführt ist, in Abhängigkeit von den erfassten Sensordaten ein 3D-Modell des Objekts zu erstellen und das Volumen des Objekts auf Basis des erzeugten 3D-Modells zu bestimmen.

Gemäß allgemeinen Gesichtspunkten der Erfindung umfasst die Sensoreinrichtung einen ersten Tiefenbildsensor und einen zweiten Tiefenbildsensor, die so angeordnet sind, dass das durch das Flurförderzeug bewegte Objekt beim Passieren des Durchgangsbereichs aus zwei unterschiedlichen Richtungen erfassbar ist.

Ferner ist die Vorrichtung ausgeführt, mit jedem der Tiefenbildsensoren eine Sequenz von Einzelbildern in einer ersten Auflösung zu erzeugen, wobei die Sequenz von Einzelbildern das Flurförderzeug und das Objekt aus unterschiedlichen Blickwinkeln beim Passieren des Durchgangsbereichs zeigen. Aufgrund der Bewegung des Objekts durch den Durchgangsbereich erfasst ein starrer Sichtkegel eines Tiefenbildsensors somit über die Zeit verschiedene Blickwinkel auf das Objekt.

Die Vorrichtung umfasst ferner eine Volumenbestimmungseinrichtung, die erfindungsgemäß ausgeführt ist, die Sequenzen der Einzelbilder in der ersten Auflösung des ersten Tiefenbildsensors und des zweiten Tiefenbildsensors einer Super-Resolution-Verarbeitung zu unterziehen, um ein das Flurförderzeug und das Objekt umfassendes 3D-Modell in einer zweiten Auflösung, die höher als die erste Auflösung ist, zu erstellen und das Volumen des Objekts auf Basis des erzeugten 3D-Modells zu bestimmen.

Eine Super-Resolution-Verarbeitung ist eine aus der 2D-Bildverarbeitung gut bekannte Technik, die auf 3D-Projekte übertragbar ist, wobei durch Registrierung und Image Stacking bzw. zeitliche und örtliche Kombination von Daten verschiedener Einzelbilder niedriger Auflösung auf Grundlage von in den Bildern enthaltener redundanter und/oder komplementärer Bildinformation ein Bild mit höherer Auflösung erzeugt wird.

Ein besonderer Vorzug der Erfindung liegt somit darin, dass vergleichsweise kostengünstige Tiefenbildsensoren niedriger Auflösung eingesetzt werden können, da erfindungsgemäß aus den Sensordaten niedriger Auflösung ein 3D-Modell höherer Auflösung erzeugt wird, die höher als die native Sensorauflösung ist, um eine zuverlässige und genaue Bestimmung des Objektvolumens durchführen zu können. Bei dem vorgeschlagenen Messprinzip ist die Objektbewegung somit kein erschwerender bzw. zu überwindender Faktor, sondern wichtiger Teil der Messung, der ausgenutzt wird, um ein hochauflösendes Modell der Oberflächenform des Objekts zu erzeugen.

Ein weiterer Vorteil ist, dass gemäß der vorgeschlagenen Vorrichtung zwei Tiefenbildsensoren, mit denen das Objekt aus zwei unterschiedlichen Richtungen erfassbar ist, ausreichend sind, um das 3D-Modell zu erzeugen, da die aufgenommenen Bildsequenzen jedes Tiefenbildsensors das Objekt aus sich verändernden Blickwinkeln zeigen, so dass durch entsprechende Rekombination der Einzelbilder ein vollständiges 3D-Modell erzeugt werden kann.

Ebenso ist vorteilhaft, dass eine vom Sichtkegel eines Tiefenbildsensors aktuell erfassbare Oberflächenform des Objekts im Wesentlichen gleichzeitig als Pixelbild, d. h. als ganzes Bild, erfasst werden kann und nicht in Form von nacheinander aufgenommen Streifenbildern. Dies erhöht die Robustheit gegenüber einem Verwackeln des Objekts, da in diesem Fall ein ganzes Bild "springt", nicht nur ein Streifen, und da ein ganzes Bild im Vergleich zu einem Streifen leichter zu registrieren ist.

Besonders vorteilhaft ist, wenn die Integration, d. h. Registrierung und Überlagerung der Daten mittels sog. truncated signed distance functions (TSDFs) erfolgt, da so Messfehler durch zufällige Abweichungen verlässlich korrigiert werden und die Integration der Daten optimal im Sinne der kleinsten Fehlerquadrate ist. Ferner lassen sich so Drifts vermeiden.

Die Tiefenbildsensoren erzeugen Pixelbilder, wobei für jeden Pixel eines Einzelbildes eine Distanzinformation bzw. ein Distanzwert ermittelt wird. Die Distanzinformation ist ein Maß für den Abstand des erfassten Oberflächenpunkts zum Tiefenbildsensor. Die verwendeten Tiefenbildsensoren können beispielsweise nach dem Structured-Light-Prinzip, dem Time-of-Flight-Prinzip oder dem Stereo-Vision-Prinzip arbeiten. Die Tiefenbildsensoren arbeiten analog zu Videokameras, indem sie das Objekt und das Flurförderzeug beim Passieren des Durchgangsbereichs "filmen", wobei jedes Einzelbild der Tiefenbildsensoren eine Ansicht aus der Aufnahmerichtung auf das Objekt und das Flurförderzeug zeigt. Da sich das Objekt, zumindest im bewegten Zustand, an den Tiefenbildsensoren vorbeibewegt, zeigt ein nachfolgendes Einzelbild jeder Sequenz eine leicht veränderte Ansicht auf das Objekt bzw. das Flurförderzeug.

Das Objekt kann beispielsweise eine Ladung oder ein Ladegut eines Flurförderfahrzeugs sein. Das Flurförderzeug kann beispielsweise ein Gabelstapler, Elektrohubwagen, Niederhubwagen, Hochhubwagen, Handhubwagen, Kommissionierwagen, Schubmaststapler, Plattformwagenoder dergleichen sein. Das Flurförderzeug kann ferner ein fahrbares Transportbehältnis sein, das die transportierte Ladung zumindest teilweise umschließt, beispielsweise ein Rollwagen, Gitterwagen, oder Gitterrollwagen. Der Durchgangsbereich kann beispielsweise ein Verladetor, eine Verladepassage, ein Industrietor, ein Garagentor, ein Innentor, eine Vorsatzschleuse, ein Tunnel, ein Portal, ein markierter Wegbereich sein oder allgemein ein von einem Flurförderzeug beim Transport von Ladegütern in einer vorbestimmten Bewegungsrichtung durchlaufender Bereich sein.

Gemäß einer bevorzugten Ausgestaltungsform sind die zwei Tiefenbildsensoren so an dem Durchgangsbereich angeordnet, dass ein vorderer Bereich, ein oberer Bereich, ein erster seitlicher Bereich und ein zum ersten seitlichen Bereich gegenüberliegender zweiter seitlicher Bereich einer Oberflächenform des Objekts und des Flurförderzeugs erfassbar sind, wenn das Objekt den Durchgangsbereich passiert, wobei mit dem ersten Tiefenbildsensor zumindest der erste seitliche Bereich erfassbar ist und mit dem zweiten Tiefenbildsensor zumindest der zweite seitliche Bereich erfassbar ist. Die beiden Tiefenbildsensoren sind somit vorzugsweise so positioniert, dass mit ihnen jeweils komplementäre seitliche Bereiche des bewegten Objekts erfassbar sind.

Besonders vorteilhaft ist eine Anordnung der zwei Tiefenbildsensoren, wenn diese am Durchgangsbereich so angeordnet und ausgerichtet sind, dass das bewegte Objekt von schräg oben erfassbar ist. Die Sichtkegel dieser zwei Tiefenbildsensoren sind somit vorzugsweise nach schräg unten und zur Stirnseite des sich im Durchgangsbereich bewegenden Flurförderzeugs hinverschwenkt ausgerichtet. Dadurch kann jeder Tiefenbildsensor vorzugsweise eine Vorderseite, eine Oberseite und entweder eine linke oder eine rechte Seite des Objekts im Durchgangsbereich erfassen. Die zwei Tiefenbildsensoren können so am Durchgangsbereich angeordnet sein, dass das Objekt beim Passieren des Durchgangsbereichs unterhalb und zwischen den zwei Tiefenbildsensoren vorbeibewegt wird. Diese Variante ermöglicht einen guten Schutz der Sensoren vor Beschädigungen im Verladebetrieb.

Insbesondere können die Tiefenbildsensoren so angeordnet sein, dass sie das bewegte Objekt von schräg oben und von vorne erfassen und die Achsen der Sichtkegel der zwei Tiefenbildsensoren einander zugeneigt sind.

Besonders vorteilhaft ist ferner, wenn ein Sichtkegel zumindest eines Tiefenbildsensors so ausgeführt ist, dass eine Rückseite des Objekts beim Passieren des Durchgangsbereichs zumindest bei einem Wiederaustreten des Objekts aus dem Sichtkegel kurzzeitig erfassbar ist. Damit kann auch eine Hinterkante des Objekts zumindest in einigen Bildern der Bildsequenz erfasst werden. Wird das erfasste Objekt beispielsweise von schräg oben mittels der Tiefenbildsensoren erfasst, kann dies realisiert werden, wenn zumindest eine Mantellinie des Sichtkegels eine Vertikale schneidet.

Im Rahmen der Erfindung besteht jedoch auch die Möglichkeit, die zwei Tiefenbildsensoren gerade nach unten auszurichten, so dass das Objekt von gerade oben erfasst wird, oder die zwei Tiefenbildsensoren auf gegenüberliegenden Seiten eines Durchgangsbereich anzuordnen, derart, dass die Sichtkegel senkrecht zur Bewegungsrichtung des Objekts und einander zugewandt ausgerichtet sind.

Im Rahmen der Erfindung besteht jedoch auch die Möglichkeit, einen ersten Tiefenbildsensor so am Durchgangsbereich anzuordnen und auszurichten, dass das Objekt hiermit von schräg oben und von vorne erfassbar ist und den zweiten Tiefenbildsensor gerade nach unten auszurichten, so dass das Objekt beim Passieren des Durchgangsbereichs von gerade oben erfasst wird. Gemäß einer Variante dieser Anordnungsmöglichkeit ist der erste Tiefenbildsensor vorzugsweise so an einem seitlichen oberen Rand des Durchgangsbereich angeordnet, dass das Objekt beim Passieren des Durchgangsbereichs nicht direkt unterhalb, sondern seitlich bzw. seitlich unterhalb am ersten Tiefenbildsensor vorbeibewegt wird, während der zweite Tiefenbildsensor vorzugsweise mittig oben am Durchgangsbereich angeordnet ist, mit dem Sichtkegel senkrecht nach unten.

Eine vorteilhafte Ausgestaltungsform der Erfindung sieht vor, dass die Volumenbestimmungseinrichtung ausgeführt ist, durch Ermittlung von in den Bildsequenzen bewegten Elementen einen das Flurförderzeug und das Objekt umfassenden Zielbereich (engl. Region of Interest (RoI)) in den Einzelbildern zu bestimmen, für den die Super-Resolution-Verarbeitung durchgeführt wird. Somit kann die Objektbewegung vorteilhafterweise genutzt werden, um das Objekt und Flurförderzeug von dem Bildhintergrund zu trennen und die Super-Resolution-Verarbeitung nur auf diese Bildbereiche zu beschränken.

Bewegte Elemente können beispielsweise anhand derjenigen Pixelbereiche ermittelt werden, für die sich eine Distanzinformation gegenüber einem Vorgängerbild oder gegenüber einem Hintergrundbild bzw. leerem Bild, d. h. einem Bild, in dem das Flurförderzeug und das Objekt nicht enthalten sind, verändert. Wenn sich beispielsweise ein Distanzwert eines Pixels in einem Einzelbild zum nachfolgenden Einzelbild in der Bildsequenz sprunghaft ändert, beispielsweise wenn die Differenz der Distanzwerte der entsprechenden Pixel in dem Bild und dem Vorgängerbild bzw. dem Hintergrundbild einen vorgegebenen Schwellenwert überschreitet, kann dies zur Identifizierung eines sich bewegenden Gegenstandes in dem Bild verwendet werden.

Bei einer vorteilhaften Variante dieser Ausgestaltungsform ist die Volumenbestimmungseinrichtung ausgeführt, für die Bestimmung des Zielbereichs nur diejenigen bewegten Elemente zu verwenden, die eine vorbestimmte Mindestgröße überschreiten und/oder sich entlang einer vorgegebenen Richtung oder Trajektorie bewegen. Dadurch können beispielsweise kleine und/oder sich im Bildhintergrund bewegende Objekte, die sich in der Regel nicht entlang der erwarteten Trajektorie des Flurförderzeugs bewegen, identifiziert und zuverlässig herausgefiltert werden. Hierbei ist festzustellen, dass sich das Flurförderzeug und damit das mit dem Flurförderzeug bewegte Objekt in dem Durchgangsbereich gemäß einer vorbestimmten Bewegungsrichtung, beispielsweise entlang der vorgegebenen Transportrichtung zum Durchqueren eines Verladetors, bewegt.

Besonders vorteilhaft ist die Super-Resolution-Verarbeitung derart auszuführen, dass zuerst Daten der Sequenz von Einzelbildern des ersten Tiefenbildsensors zeitlich kombiniert werden und Daten der Sequenz von Einzelbildern des zweiten Tiefenbildsensors zeitlich kombiniert werden und anschließend die zeitlich kombinierten Bilddaten des ersten Tiefenbildsensors mit den zeitlich kombinierten Bilddaten des zweiten Tiefenbildsensors räumlich kombiniert werden. Diese Reihenfolge erhöht die Genauigkeit des resultierenden 3D-Modells, da die räumliche Kombination aufwändiger ist und zu besseren Ergebnissen führt, je besser die Ausgangsdaten sind.

Im Rahmen der Erfindung besteht jedoch auch die Möglichkeit, zuerst entsprechende Einzelbilder aus der Bildsequenz der Tiefenbildsensoren räumlich zu kombinieren und anschließend die räumlich kombinierten Bilddaten zeitlich zu kombinieren. Gemäß beiden Varianten erzeugt die Super-Resolution-Verarbeitung somit eine dreidimensionale Punktwolke des Flurförderzeugs und des Objekts, aus der anschließend ein 3D-Modell bestimmt werden kann.

Gemäß einem weiteren Aspekt der Erfindung ist die Volumenbestimmungseinrichtung ausgeführt, bei der Super-Resolution-Verarbeitung in Einzelbildern fehlende oder fehlerhafte Bildinformationen bei der Erstellung des 3D-Modells zu ergänzen und/oder zu korrigieren. Die Überlagerung der mehreren Einzelbilder, die von dem Objekt und dem Flurförderzeug beim Passieren des Durchgangsbereichs von den Tiefenbildsensoren erstellt werden, ermöglicht somit neben dem vorteilhaften Effekt der Auflösungserhöhung auch das Nachliefern nicht vorhandener oder fehlerhafter Bildinformationen in Bildteilen einzelner Bilder. Nicht vorhandene oder fehlerhafte Bildinformationen können durch andere Einzelbilder aus der Sequenz nachgeliefert werden, in denen die entsprechende Information über den fehlenden oder fehlerhaften Teilbereich enthalten ist. Dadurch können einerseits zufällige Fehler als auch andererseits fehlende Messwerte korrigiert werden. Letzteres erfordert, dass die entsprechenden Bildinformationen betreffend den Oberflächenteilabschnitt des Objekts in zumindest einem Tiefenbild enthalten sind.

Um das Volumen des Objekts auf Basis des erzeugten 3D-Modells zu bestimmen, ist es erforderlich, in dem 3D-Modell das Objekt von dem Flurförderzeug zu trennen, so dass eine Oberflächenform des Objekts ermittelt werden kann.

Eine mögliche Variante sieht hierbei vor, dass die Volumenbestimmungseinrichtung ausgeführt ist, eine am Flurförderzeug an einer vorbestimmten, durch das Objekt nicht verdeckbaren Stelle befestigte Markierung zur Unterscheidung des Objekts und des Flurförderzeugs zu verwenden.

Die Markierung kann beispielsweise streifenartig ausgeführt sein, was eine zuverlässige Erkennung begünstigt. Ferner kann die Volumenbestimmungseinrichtung eingerichtet sein, anhand der erfassten Markierung eine Vertikalbewegung des Objekts relativ zum Flurförderzeug zu bestimmen. Aus der Praxis ist bekannt, dass sich eine Vertikalposition eines bewegten Ladeguts beim Passieren des Durchgangsbereichs verändern kann, z. B. durch Anheben oder Absenken der Hubzinken eines Gabelstaplers. Ein derartiges vertikales Verfahren des Objektes kann zuverlässig durch Vergleich des Abstands einer Oberkante des Objekts zu der starren Markierung erkannt werden. Die so erfasste Vertikalbewegung kann beim Zusammensetzen der Bildsequenzen im Rahmen der Super-Resolution-Verarbeitung als Korrekturfaktor verwendet werden.

Die Markierung kann seitlich zur Fahrtrichtung an einem Hubmast des Flurförderzeugs angebracht sein, falls das Flurförderzeug beispielsweise als Gabelstapler ausgeführt ist. Eine Markierung am Hubmast bietet ferner den Vorteil, dass die Volumenbestimmungseinrichtung eingerichtet sein kann, anhand der erfassten Markierung eine Neigung des Hubmastes zu bestimmen. Eine Neigung des Hubmastes bedingt eine entsprechende Neigung der Hubzinken, welche eine Bodenebene für das Objekt festlegen. Die Neigung der Hubzinken bzw. der Bodenebene bedingt daher eine entsprechende Neigung des Objekts bzw. Ladeguts, das auf den Hubzinken bzw. der Bodenebene gelagert ist. Eine derart erfasste Neigung kann somit als Korrekturfaktor bei der Erstellung des 3D-Modells verwendet werden, um die Genauigkeit zu erhöhen. Insbesondere kann die Volumenbestimmungseinrichtung eingerichtet sein, anhand der bestimmten Neigung des Hubmastes eine zum Hubmast parallele Trennebene, sowie die hierzu senkrechte Bodenebene des Ladeguts bzw. die Neigung der Bodenebene zu bestimmen, wobei die Trennebene und die Bodenebene einen möglichen Aufenthaltsort des Objekts begrenzen.

Die Trennebene enthält den Hubmast des Flurförderzeugs oder weist hierzu einen vorbestimmten Abstand auf, der spezifisch für ein Flurförderzeug vorgeben werden kann. Der Abstand gibt den kleinsten möglichen Abstand des Objekts zum Hubmasten an. Die Trennebene legt somit eine Begrenzungsebene fest, die eine Grenze für einen möglichen Aufenthaltsort des Objektes darstellt, da das Objekt sich beispielsweise immer vor dem Hubmast befindet. Eine derartige bestimmte Trennebene kann somit zur Identifizierung des Objekts in dem Zielbereich verwendet werden, um eine Oberflächenform des Objekts zuverlässig von einer Oberflächenform des Flurförderzeugs zu unterscheiden.

Gemäß einem weiteren Aspekt der Erfindung kann die Vorrichtung eine synchronisierte RGB-Kamera zur Erkennung der Markierung der vorgenannten Ausführungsvarianten aufweisen. Synchronisiert in dem Sinne, dass der Blickwinkel, der Öffnungswinkel und die Bild-Rate der RGB-Kamera mit dem Tiefenbildsensor übereinstimmt.

Eine alternative Ausführungsvariante zur Trennung des Objekts von dem Flurförderzeug in dem erzeugten 3D-Modell sieht vor, dass die Vorrichtung ausgeführt ist, eine Sequenz von Einzelbildern des unbeladenen Flurförderzeugs bei einer Durchfahrt durch den Durchgangsbereich zu erfassen. Die kann bei einer Hinfahrt oder Rückfahrt des Flurförderzeugs erfolgen, je nachdem ob ein Beladungs- oder ein Entladungsvorgang stattfindet. Beispielsweise kann die Vorrichtung das Flurförderzeug bei der Rückfahrt durch den Durchgangsbereich, nachdem das Flurförderzeug seine Ladung abgeladen hat, erfassen. Die Volumenbestimmungseinrichtung kann dann ausgeführt sein, anhand dieser Sequenz von Einzelbildern eine Oberflächenform des Flurförderzeugs ohne Objekt zu ermitteln, die zur Unterscheidung einer Oberflächenform des Objekts von der Oberflächenform des Flurförderzeugs in dem 3D-Modell verwendet wird. Diese Ausführungsvariante bietet den Vorteil, dass keine zusätzlichen Markierungen oder Datenbanken mit den Modellen der Flurförderzeuge notwendig sind.

Gemäß einer weiteren Ausführungsform kann die Vorrichtung auch eine Datenbank umfassen, in der 3D-Modelle unterschiedlicher Flurförderzeuge hinterlegt sind. Hierbei ist die Volumenbestimmungseinrichtung zur Unterscheidung einer Oberflächenform des Objekts von der Oberflächenform des Flurförderzeugs ausgeführt, die Oberflächenform des Flurförderzeugs in dem 3D-Modell mittels der hinterlegten 3D-Modelle und vorgegebener Identifizierungsmerkmale zu ermitteln. Die vorgegebenen Identifizierungsmerkmale können beispielsweise bestimmte Kanten, Ecken oder sonstige kennzeichnende Merkmale des Flurförderzeugs sein, die in der Regel nicht von der Ladung verdeckt sind und die in den Bilddaten gesucht werden, um den Typ des Flurförderzeugs zu ermitteln und anschließend die in der Datenbank für diesen Typ hinterlegte Oberflächenform auszulesen.

Vorstehend wurde bereits erwähnt, dass das Flurförderzeug ein fahrbares Transportbehältnis sein kann, das die transportierte Ladung zumindest teilweise umschließt, beispielsweise ein Rollwagen, Gitterwagen, oder Gitterrollwagen. Gemäß dieser Ausführungsform kann die Volumenbestimmung der Ladung zur Füllstandbestimmung des Rollwagens bzw. Gitterwagens verwendet werden.

Hierbei wird das 3D-Modell wiederum verwendet, um die Ladung von dem Flurförderzeug unterscheiden zu können, wobei es hierzu nicht notwendig ist, das Flurförderzeug aus der Szene herauszurechnen, um anhand der verbleibenden Oberflächenform der Ladung deren Volumen zu bestimmen. Vielmehr kann es ausreichend sein, anhand des 3D-Modells das Transportbehältnis, hier ein Rollwagen oder Gitterwagen, zu erkennen und es von der Ladung zu trennen bzw. zu unterscheiden. Zur Volumenbestimmung kann entweder die Länge, Höhe und Breite und damit das Volumen der Ladung bestimmt und ausgegeben werden oder aber ein Prozentwert im Vergleich zur Größe des Transportbehältnisses, d. h. die Auslastung oder der Füllstand des Transportbehältnisses bestimmt und ausgegeben werden. Eine beispielhafte Anwendung könnte ein Gitterwagen und/oder Rollwagen sein, mit dem eine Vielzahl von Brief-, Paket- und/oder Warensendungen als Ladung transportiert werden.

Vorstehend wurde bereits erwähnt, dass die Tiefenbildsensoren so im Durchgangsbereich angeordnet sein können, dass das mit dem Flurförderzeug bewegte Objekt von schräg oben erfassbar ist. Der erste Tiefenbildsensor und der zweite Tiefenbildsensor können beispielsweise in einer Höhe von 2 bis 4 Metern, weiter vorzugsweise in einer Höhe von 2,5 bis 3 Metern, über dem Boden angeordnet sein und/oder 2,5 bis 4 Meter quer zur Bewegungsrichtung des Objekts im Durchgangsbereich voneinander beabstandet angeordnet sein. Im Rahmen der Erfindung wurde festgestellt, dass eine derartige Anordnung der Tiefenbildsensoren einerseits eine besonders zuverlässige Erfassung der Oberflächenform des Objekts und des Flurförderzeugs ermöglicht und ferner eine unbeabsichtigte Beschädigung durch das vorbeifahrende Flurförderzeug vermieden werden kann.

Gemäß einer besonders vorteilhaften Ausführungsvariante zur Erzeugung von Tiefenbilddaten sind genau zwei Tiefenbildsensoren vorgesehen, die zur Erstellung des 3D-Modells des Objekts verwendet werden, so dass keine weiteren Tiefenbildsensoren zur Erfassung der Oberflächenform notwendig sind.

Gemäß einer weiteren Ausführungsvariante können jedoch ein oder zwei zusätzliche Tiefenbildsensoren in einem unteren Abschnitt des Durchgangsbereichs angeordnet sein. Insbesondere wenn das bewegte Objekt mit dem ersten und dem zweiten Tiefenbildsensor von schräg oben erfasst wird, bieten solche zusätzlichen Tiefenbildsensoren den Vorteil einer besonders genauen Erfassung der Unterkante des Objekts.

Alternativ kann ein zusätzlicher Tiefenbildsensor auch so angeordnet sein, das er das bewegte Objekt von oben erfasst und im Wesentlichen vertikal nach unten ausgerichtet ist. Ein derartig ausgerichteter Tiefenbildsensor kann zuverlässig eine Hinterkante und/oder Rückseite des Objekts erfassen und somit die Genauigkeit des erzeugten 3D-Modells verbessern.

Die Erfindung betrifft ferner ein Verfahren zur Volumenbestimmung eines durch ein Flurförderzeug bewegten Objekts, umfassend die Schritte: (a) Anordnen eines ersten Tiefenbildsensors und eines zweiten Tiefenbildsensors an einem Durchgangsbereich des bewegten Objekts derart, dass das Objekt beim Passieren des Durchgangsbereichs aus zwei unterschiedlichen Richtungen erfassbar ist; (b) Erzeugen einer Sequenz von Einzelbildern in einer ersten Auflösung mit jedem der Tiefenbildsensoren, die das Flurförderzeug und das Objekt aus unterschiedlichen Blickwinkeln beim Passieren des Durchgangsbereichs zeigen; (c) Erzeugen eines das Flurförderzeug und das Objekt umfassenden 3D-Modells in einer zweiten Auflösung, die höher als die erste Auflösung ist, durch Durchführen einer Super-Resolution-Verarbeitung auf Basis der Sequenz von Einzelbildern in der ersten Auflösung des ersten Tiefenbildsensors und des zweiten Tiefenbildsensors; und (d) Bestimmen des Volumens des Objekts auf Basis des erzeugten 3D-Modells.

Zur Vermeidung von Wiederholungen sollen rein vorrichtungsgemäß offenbarte Merkmale auch als verfahrensgemäß offenbart gelten und beanspruchbar sein.

Weitere Einzelheiten und Vorteile der Erfindung werden im Folgenden unter Bezug auf die beigefügten Zeichnungen beschrieben. Es zeigen:
- Figur 1: Seitenansichten zur Illustration der Erfassung eines durch ein Flurförderzeug bewegten Objekts beim Passieren eines Durchgangsbereichs mittels zweier Tiefenbildsensoren;
- Figur 2: die Darstellungen der Figur 1 in jeweils einer Draufsicht;
- Figur 3: die Darstellungen der Figur 1 in jeweils einer Vorderansicht;
- Figur 4: eine Vorrichtung zur Volumenbestimmung gemäß einer Ausgestaltungsform;
- Figur 5: ein Ablaufdiagramm des Verfahrens zur Volumenbestimmung;
- Figur 6: die Bestimmung eines das Flurförderzeug und das Objekt enthaltenen Zielbereichs in den Einzelbildern;
- Figur 7: eine Darstellung des Zielbereichs in Weltkoordinaten;
- Figur 8: ein 2,5D-Modell während einzelner Schritte der zeitlichen Integration der Super-Resolution-Verarbeitung;
- Figur 9A und 9B: ein 3D-Modell nach der räumlichen Integration der Super-Resolution-Verarbeitung;
- Figur 10: ein 3D-Modell des Objekts nach der Trennung vom Flurförderzeug;
- Figur 11: eine Draufsicht zur Illustration der Anordnung zweier Tiefenbildsensoren gemäß einer weiteren Ausführungsform; und
- Figur 12: ein 3D-Modell gemäß einer weiteren Ausführungsform.

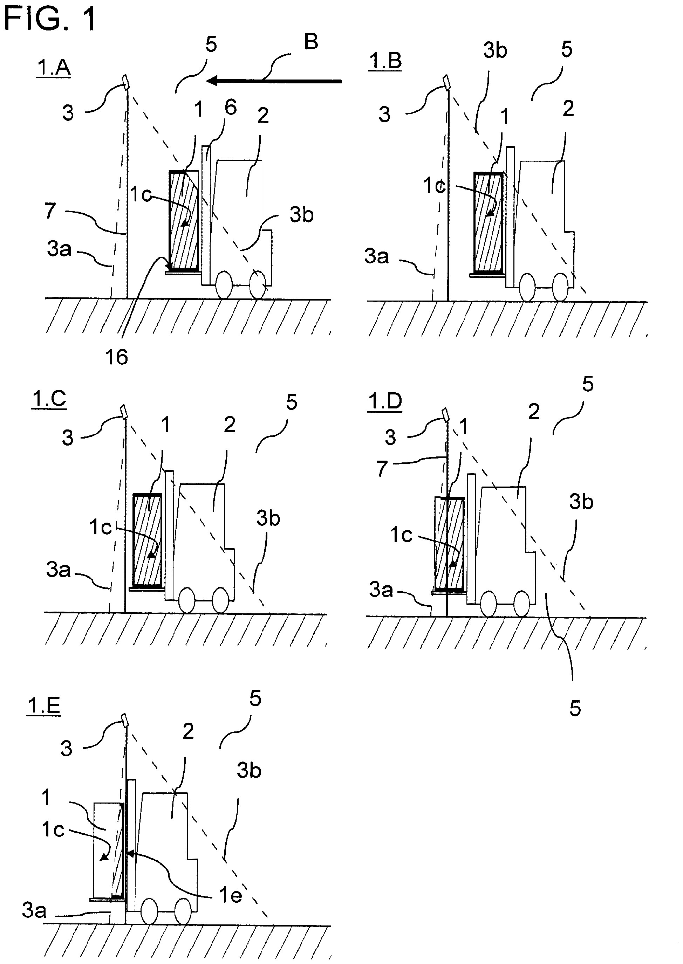

Figur 1 illustriert ein Flurförderzeug 2 und ein damit bewegtes Ladegut 1 beim Passieren eines Durchgangsbereichs 5 und die Erfassung des bewegten Ladeguts 1 mittels zweier Tiefenbildsensoren 3, 4.

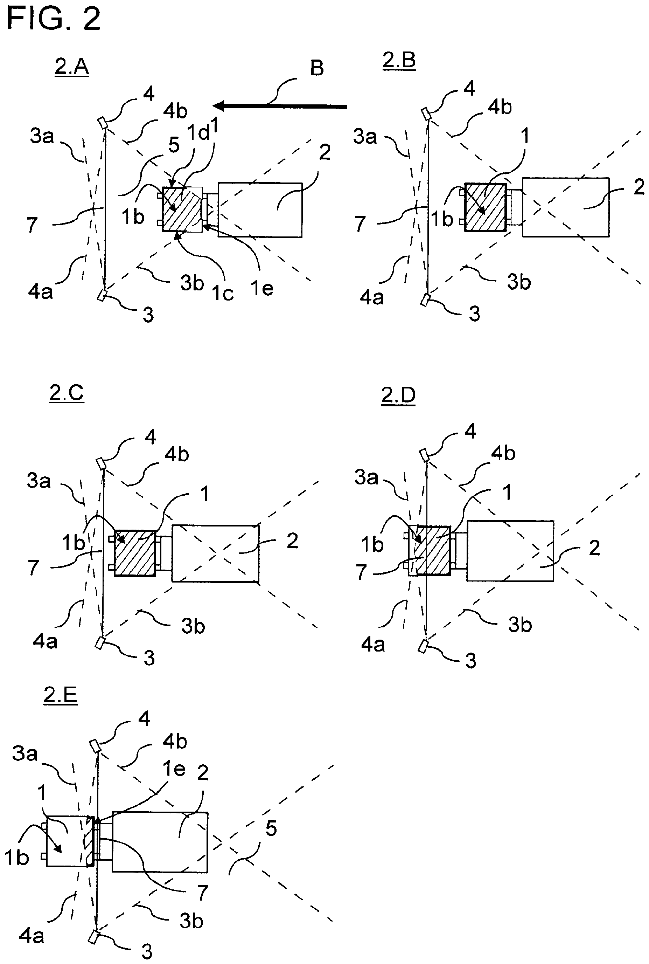

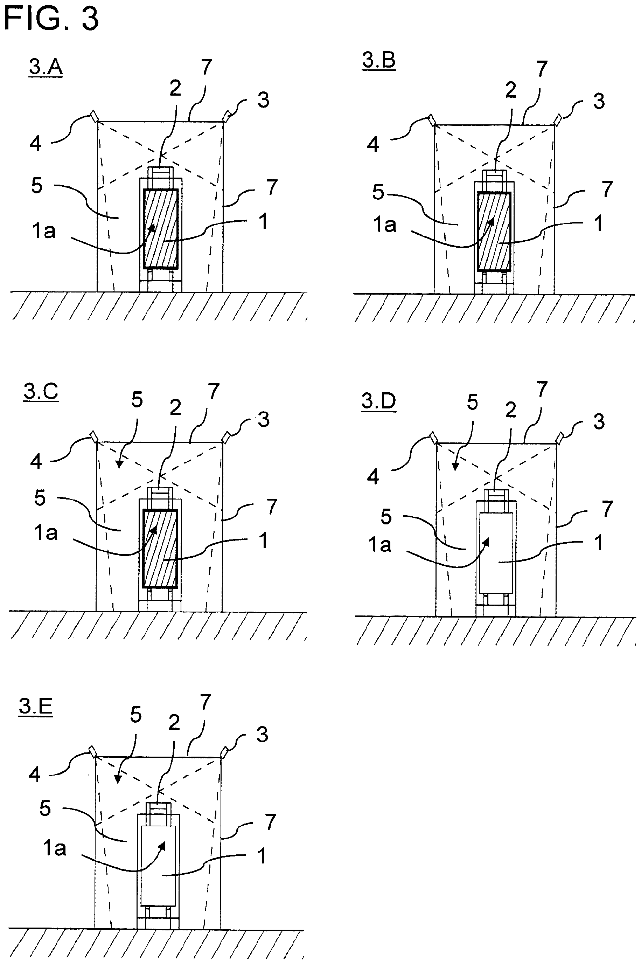

Hierbei illustrieren die Unterfiguren 1.A bis 1.E unterschiedliche Positionen des Ladeguts 1 und des Flurförderzeugs 2 beim Durchqueren des Durchgangsbereichs 5. Die Figuren 2 und 3 zeigen zur Figur 1 entsprechende Positionen des Flurförderzeugs 2 und des Ladeguts 1 in einer Draufsicht und einer Vorderansicht. Hierbei entsprechen Komponenten mit gleichen Bezugszeichen den Komponenten der Figur 1 und werden nicht gesondert beschrieben.

Das Flurförderzeug 2 ist im vorliegenden Beispiel ein Gabelstapler, auf dessen Hubzinken das Ladegut 1 transportiert wird. Mit dem Bezugszeichen 7 ist beispielhaft ein Ladetor 7 eines Logistikterminals gekennzeichnet. Der Durchgangsbereich umfasst den Bereich vor und kurz nach dem Verladetor 7. Der mit B gekennzeichnete Pfeil gibt die normale Fahrtrichtung des beladenen Flurförderzeugs 2 im Durchgangsbereich an. In der Praxis ist es jedoch auch möglich, dass sich ein beladenes Flurförderzeug in die zu B entgegengesetzte Richtung bewegt, beispielsweise dann, wenn das Flurförderzeug zum Entladen eines LKWs oder Containers beladen rückwärts zurück durch den Durchgangsbereich fährt, wobei dann die Stirnseite des Flurförderzeugs wiederum auf der der Sensoranordnung zugewandten Seite ist. Die Vorrichtung kann somit eingerichtet sein, sowohl für Beladevorgänge, bei denen das Flurförderzeug typischerweise vorwärts durch den Durchgangsbereich fährt, als auch für Entladevorgänge, bei denen das Flurförderzeug typischerweise rückwärts durch den Durchgangsbereich fährt, das Flurförderzeug mit den Tiefenbildsensoren zu erfassen und das Volumen des transportierten Objekt mit der Volumenbestimmungseinrichtung zu bestimmen.

Zur Erfassung der Oberflächenform des Ladeguts 1 und des Flurförderzeugs 2 sind im oberen Bereich des Ladetors 7 zwei Tiefenbildkameras 3, 4 montiert. Der Abstand der beiden auf gleicher Höhe montierten Tiefenbildkameras 3, 4 zum Boden beträgt ca. 2,5 bis 3 Meter. Quer zur Fahrtrichtung B des Flurförderzeugs 2 sind die Tiefenbildkameras 3, 4 ca. 3 Meter beabstandet. Die Tiefenbildkameras 3, 4 sind so ausgerichtet, dass das Ladegut 1 und das Flurförderzeug 2 von schräg oben erfassbar sind, was durch die gestrichelten Linien gekennzeichnet ist, die den Sichtkegel 3a, 3b der Tiefenbildkamera 3 bzw. den Sichtkegel 4a, 4b der Tiefenbildkamera 4 kennzeichnen.

Der Blickwinkel der Tiefenbildkameras 3, 4 ist somit schräg nach vorne und schräg nach unten. Aus Figur 2 ist ferner ersichtlich, dass die Sichtkegel zueinander hinverschwenkt sind.

Der Öffnungswinkel der Sichtkegel beträgt beispielsweise ca. 60 bis 90 Grad. Hierbei sind die Sichtkegel der Tiefenbildkameras 3, 4 ferner so ausgerichtet, dass eine Rückseite 1e des Ladeguts 1 beim Passieren des Verladetors 7 zumindest beim Wiederaustreten des Ladeguts 1 aus den Sichtkegeln kurzzeitig erfassbar ist. Dies ist in den Figuren 1.E und 2.E dargestellt. Die Mantellinie 4a bzw. 3a liegt hinter der Vertikalebene des Verladetores 7 und trifft so auf eine Rückseite 1e des Ladeguts 1 beim Durchqueren des Verladetores 7. Daher kann auch mit der vorliegenden Sensoranordnung aus nur zwei Tiefenbildkameras 3, 4 auch die Rückseite, sofern nicht verdeckt, des Ladeguts 1, wenn auch in nur wenigen Einzelbildern, erfasst werden, um eine komplette Ansicht des Objekts zu erhalten. Jede der Tiefenbildkameras 3, 4 kann somit eine Vorderseite, eine Oberseite, eine Seitenansicht und eine Rückkante bzw. Rückseite des Ladeguts 1 erfassen.

Die Tiefenbildkameras 3, 4 sind Pixelkameras und können beispielsweise nach dem sog. Structured-Light-Prinzip oder dem Time-of-Flight-Prinzip oder dem Stereo-Vision-Prinzip arbeiten. Die Tiefenbildkameras 3, 4 ermitteln für jeden Pixel der Pixelmatrix einen Distanzwert zwischen dem Ladegut 1 und der Sensorebene. Aktuelle derartige Tiefenbildkameras haben beispielsweise Auflösungen von 160 x 120 Pixeln, 320 x 240 Pixeln oder 640 x 480 Pixeln für jedes Einzelbild.

Bei Eintritt eines Flurförderzeugs in den Durchgangsbereich 5 werden das Ladegut 1 und das Flurförderzeug 2 von jeder Tiefenbildkamera 3, 4 mit einer vorgegebenen Bild-Rate gefilmt, beispielsweise mit einer Bildrate von 30 Bildern pro Sekunde (frames per second (fps)), was einen Video-Stream von Tiefenbildern erzeugt.

Wie aus den Figuren 1 bis 3 ersichtlich, ist der erste Tiefenbildsensor 3 so ausgerichtet, dass ein vorderer Bereich 1a, ein oberer Bereich 1b und ein erster seitlicher Bereich 1c des Ladeguts bzw. entsprechende Bereiche des Flurförderzeugs beim Durchfahren des Durchgangsbereichs 5 erfassbar sind. Je nach Verfahrposition des Flurförderzeugs 2 bzw. abhängig davon, wie weit sich das Flurförderzeug und das Ladegut 1 innerhalb des Sichtkegels der Tiefenbildkamera 3 befindet, werden die Vorderseite, die Oberseite und der seitliche Bereich vollständig oder nur teilweise erfasst. Dies ist für das Ladegut 1 in den Figuren 1 bis 3 beispielhaft durch die schraffierte Fläche illustriert, die jeweils den Teil der Oberflächenform des Ladeguts 1 kennzeichnet, der sich aktuell innerhalb des Sichtkegels der Tiefenbildkamera 3 befindet.

In analoger Weise erfasst die Tiefenbildkamera 4 den zum ersten seitlichen Bereich 1c gegenüberliegenden seitlichen Bereich 1d sowie wiederum die Vorderseite 1a und die Oberseite 1b bzw. abhängig von der Verfahrposition wiederum jeweils nur Teilbereiche (vgl. Figuren 2 und 3).

Durch das vorgenannte Abfilmen des durch das Flurförderzeug 2 bewegten Objekts 1 erzeugt jede der Tiefenbildkameras 3, 4 eine Sequenz von Einzelbildern in einer nativen Auflösung dieser Tiefenbildkameras 3, 4 (erste Auflösung). Eine derartige Auflösung liegt mit den aktuell verfügbaren Tiefenbildkameras im Bereich von circa +/- 100mm, was für eine zuverlässige Volumenbestimmung zunächst nicht ausreichend ist.

Die von den Tiefenbildkameras 3, 4 aufgenommenen Bilddaten werden an eine Volumenbestimmungseinrichtung weitergeleitet und dort weiterverarbeitet, was nachfolgend noch detaillierter erläutert wird.

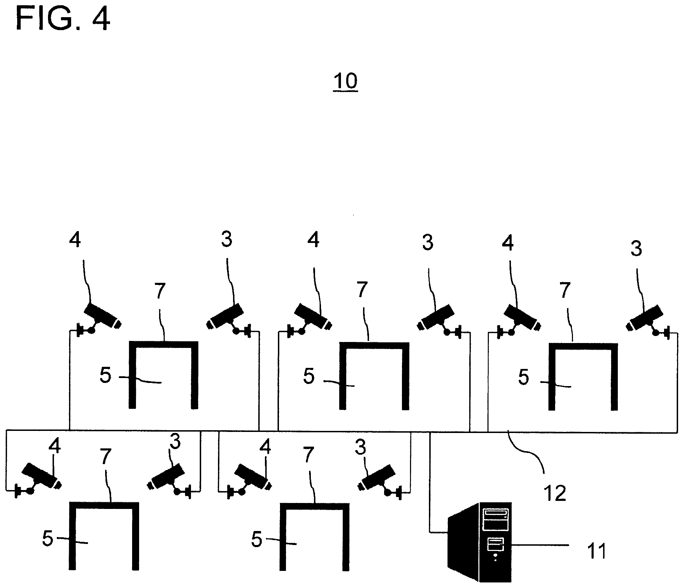

Figur 4 zeigt eine Ausführungsform einer erfindungsgemäßen Vorrichtung 10 zur Volumenbestimmung. Hierbei sind an jedem Verladetor 7 eines Verladeterminals zwei Tiefenbildkameras 3, 4 angeordnet, wie vorstehend bzgl. der Figuren 1 bis 3 beschrieben. Die von den Tiefenbildkameras 3, 4 erfassten Sequenzen von Bilddaten werden über entsprechende Kommunikationsleitungen 12 an eine zentrale Volumenbestimmungseinrichtung 11 geschickt und verarbeitet. Die zentrale Volumenbestimmungseinrichtung 11 kann ein herkömmlicher Computer sein, der programmtechnisch eingerichtet ist, die empfangenen Tiefenbilder der Tiefenbildkameras 3, 4 zur Volumenbestimmung zu verarbeiten.

Das Durchführen einer Volumenbestimmung mittels der Volumenbestimmungseinrichtung 11 wird anhand der nachfolgenden Figuren beispielhaft erläutert.

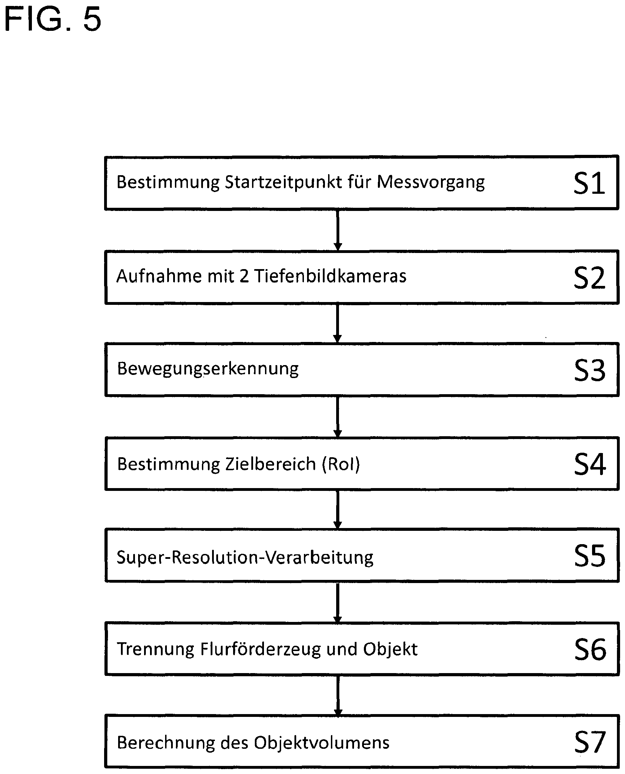

Figur 5 beschreibt in einem Ablaufdiagramm die Schritte zur Volumenbestimmung eines durch ein Flurförderzeug 2 bewegten Ladeguts 1.

In Schritt S1 wird der Startzeitpunkt für einen Messvorgang durch die Tiefenbildkameras 3, 4 bestimmt. Ein Messvorgang (Schritt S2) wird hierbei gestartet, wenn das Flurförderzeug 2 und das Ladegut sich den Sichtkegeln der Tiefenbildkameras 3, 4 nähern oder in diese eintreten. Dies kann beispielsweise mittels einer Lichtschranke, die kurz vor den Sichtkegeln quer zur Bewegungsrichtung B angeordnet ist, realisiert werden. Alternativ kann der Startzeitpunkt mittels einer Funklösung, einem Barcode-Scan oder durch Einfahrt in einen vordefinierten Bereich des Durchgangsbereichs 5 bestimmt werden. Zusätzlich können Bilder gepuffert werden, bis ein Startzeitpunkt bestimmt wird, um dann noch auf die älteren Bilder zurückgreifen zu können.

In Schritt S2 wird dann das sich durch den Durchgangsbereich 5 bewegende Flurförderzeug 2 sowie das damit transportierte Ladegut 1 mit den zwei Tiefenbildkameras 3 und 4 gefilmt, wobei jeder Tiefenbildsensor 3, 4, wie zuvor beschrieben eine Sequenz von Einzeltiefenbildern in einer vordefinierten Bild-Rate und Auflösung erzeugt, die das Flurförderzeug 2 und das Ladegut 1 aus unterschiedlichen Blickwinkeln beim Durchqueren des Durchgangsbereichs zeigen. Nachdem das Flurförderzeug 2 wieder aus dem Sichtkegel der Tiefenbildkameras 3, 4 ausgetreten ist, werden die aufgenommenen Sequenzen der Bilddaten an die Volumenbestimmungseinrichtung 11 übermittelt, die die übermittelten Bilddaten weiterverarbeitet (Schritte S3 bis S7) .

In Schritt S3 führt die Volumenbestimmungseinrichtung eine Bewegungserkennung durch. Bei der Bewegungserkennung wird das zu vermessende Ladegut 1 in Kombination mit dem Flurförderzeug 2 vom Bildhintergrund getrennt. In den einzelnen Pixelbildern werden hierzu bewegte Objekte ermittelt und als für die Volumenbestimmung wichtig klassifiziert. Bewegte Objekte zeichnen sich dadurch aus, dass die dem Objekt zugeordneten Pixel Distanzwerte aufweisen, die sich gegenüber dem Vorgängerbild sprunghaft ändern. Alternativ kann die Änderung der Distanzwerte auch basierend auf einem Hintergrundbild, d. h. einem Kamerabild ohne Flurförderzeug und Ladegut, ermittelt werden.

Hierbei werden nur Objekte ausgewählt, die eine vorbestimmte Mindestgröße aufweisen und sich in einer erwarteten Trajektorienrichtung, die der Bewegungsrichtung B entspricht, bewegen, um die Robustheit der Methode gegenüber Ausreißern oder Messfehlern zu verbessern.

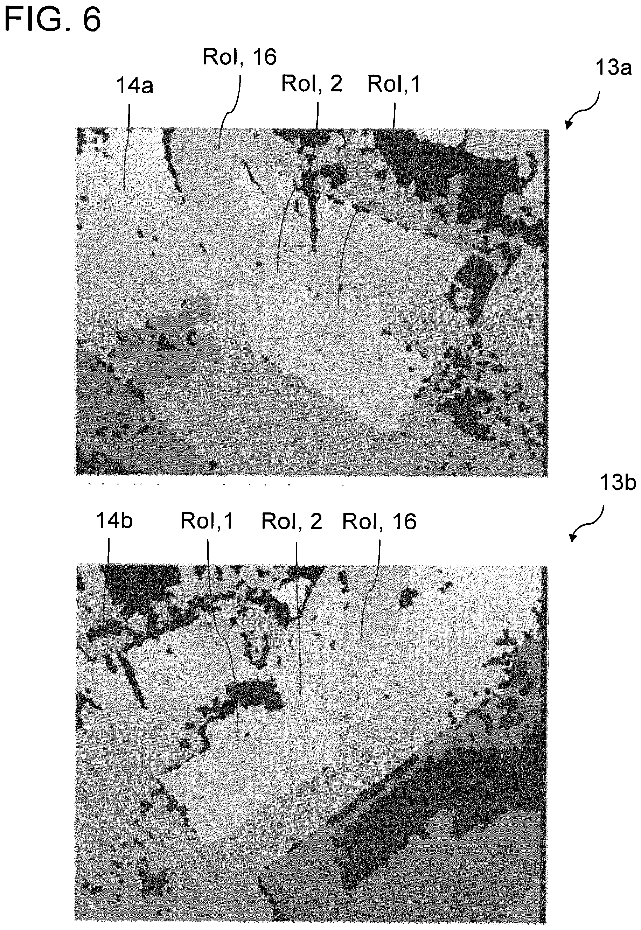

Die so ermittelten bewegten Objekte werden in Schritt S4 in den Einzelnbildern als Zielbereich (engl. region of interest (RoI)) definiert, der das Flurförderzeug 2 und das Objekt 1 umfasst. Dies ist beispielhaft in Figur 6 dargestellt. Das obere Bild 13a zeigt ein Bild eines Tiefenbildsensors, in dem der Zielbereich RoI entsprechend markiert wurde. Der Zielbereich RoI enthält einen Plattformwagen als Beispiel für ein Flurförderzeug 2, das auf dem transportierte Ladegut 1 in Form eines Pakets sowie eine Person 16, die den Plattformwagen 2 schiebt. Die anderen Bereiche 14a sind für die Volumenbestimmung des Ladeguts 1 nicht relevant. Das untere Bild 13b zeigt das korrespondierende Einzelbild aus der Sequenz des anderen Tiefenbildsensors. Der Tiefenbildbereich RoI, 1 des auf dem Plattformwagen transportierten Pakets 1 ist in der Darstellung der Graubilddarstellung der Figur 6 kaum von dem Tiefenbildbereich RoI, 2 des Plattformwagens zu unterscheiden, da beide Gegenstände ähnliche Abstandswerte zum Tiefenbildsensor aufweisen und somit ähnlich eingefärbt sind.

Dieser Zielbereich RoI wird der nachfolgenden Bearbeitung zugrunde gelegt, insbesondere der nachfolgenden Super-Resolution-Verarbeitung.

Ein besonderer Vorteil dieser Bewegungserkennung ist somit, dass die Objektbewegung vorteilhafterweise genutzt wird, um wichtige Bilddaten von unwichtigen Bilddaten zu trennen, so dass die nachfolgenden Bearbeitungsschritte nur für den identifizierten Zielbereich der Bilddaten ausgeführt werden können.

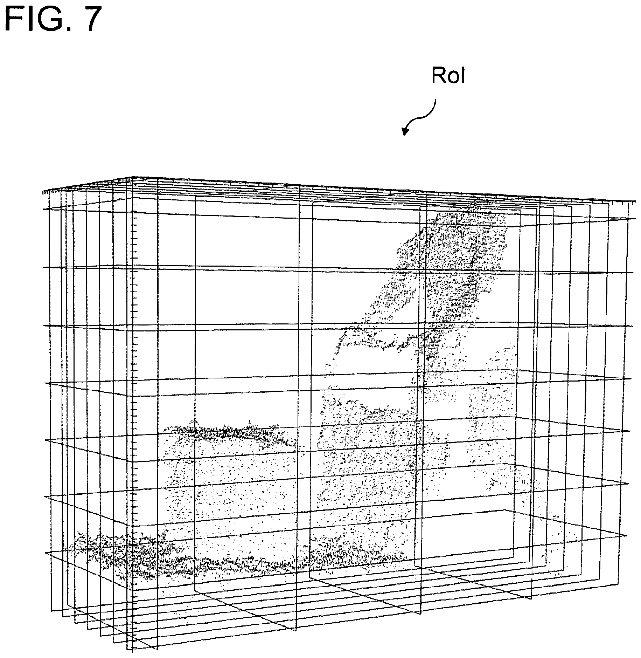

Anschließend werden jene Bilddaten RoI, die im Zuge der Bewegungserkennung als relevant und als Teil des Zielbereichs klassifiziert wurden, von Bildkoordinaten in Weltkoordinaten überführt. Dies ist in Abbildung 7 illustriert, so dass nach dieser Transformation eine dreidimensionale Punktwolke entsteht.

Anschließend wird die Geometrie der Punktkoordinaten dahingehend analysiert, ob die bekannte Geometrie des Flurförderzeugs, z. B. des Plattformwagens, in der gemessenen Punktwolke enthalten sein kann.

Anschließend wird im Schritt S5 für die Bilddaten des identifizierten Zielbereichs eine Super-Resolution-Verarbeitung durchgeführt, um durch Kombination der schlecht auflösenden Einzelbilder eine resultierende 3D-Punktwolke bzw. ein 3D-Modell mit einer stark verbesserten Auflösung, die höher als die native Sensorauflösung ist, zu erzielen.

Derartige Super-Resolution-Verarbeitungen sind an sich im Bereich der Bildverarbeitung bekannt, wobei Ausgangsbilddaten niedriger Auflösung registriert und überlagert, d. h. zeitlich und örtlich kombiniert werden. Dies beschreibt die Überlagerung zeitlich und/oder örtlich versetzter Tiefenbilder.

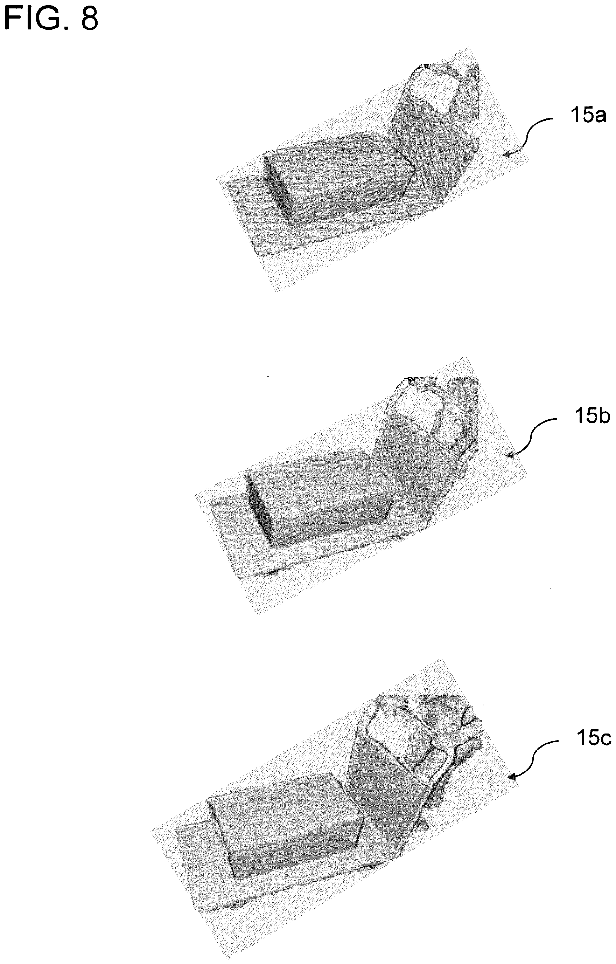

Besonders vorteilhaft ist hierbei, zuerst die Daten zeitlich von der ersten Tiefenbildkamera 3 sowie zeitlich von der zweiten Tiefenbildkamera 4 zu kombinieren. Im Zuge der zeitlichen Datenkombination werden die Tiefenbilder jedes Sensors integriert. Dadurch erhöht sich aufgrund des sich bewegenden Objekts der Informationsgehalt, da sich die sichtbaren Bereiche durch Selbstverdeckung über die Zeit ändern. Dies ist in Figur 8 dargestellt.

Das Bild 15a zeigt das 2,5D-Modell nach der zeitlichen Integration eines Tiefenbildes. Das Bild 15b zeigt das 2,5D-Modell nach der zeitlichen Integration von fünf Tiefenbildern und das Bild 15c zeigt das 2,5D-Modell nach der zeitlichen Integration von 15 Tiefenbildern, wodurch sich die Auflösung schrittweise erhöht. Die Auflösung des Ergebnisses kann dadurch beispielsweise um einen Faktor 5 besser sein als die der nativen Sensorauflösung.

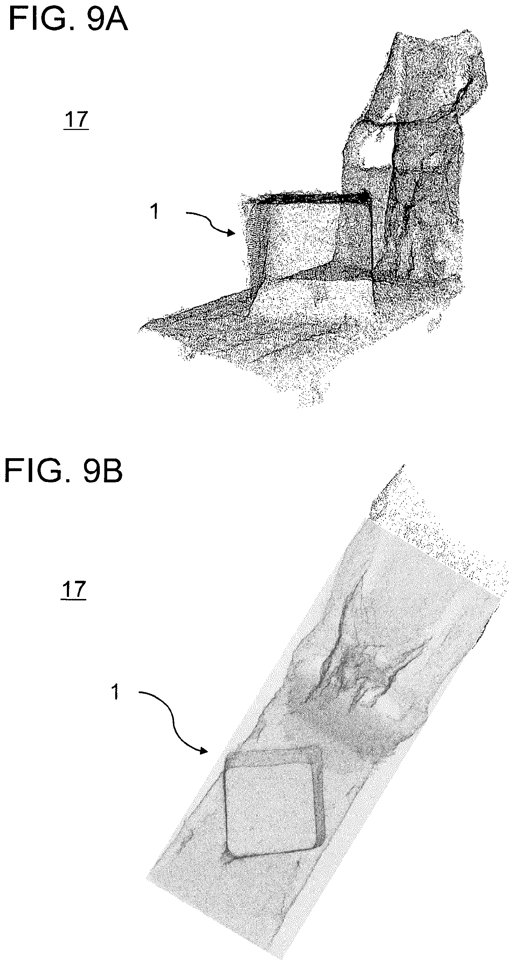

Anschließend werden die beiden 2,5D-Modelle beider Tiefenbildsensoren von der Volumenbestimmungseinrichtung räumlich kombiniert. Daraus ergibt sich ein 3D-Modell oder eine Punktwolke des Flurförderzeugs und des Objekts. Dies in den Figuren 9A bzw. 9B illustriert, die ein 3D-Modell 17 zeigen, umfassend den Plattformwagen, die den Plattformwagen schiebende Person, sowie das mit dem Plattformwagen transportierte Ladegut 1.

Zusätzlich werden durch die Überlagerung von vielen Einzelbildern nicht vorhandene Informationen in Bildteilen (leere Bildteile) durch andere Einzelbilder nachgeliefert, die Informationen über den Teilbereich enthalten. Es werden einerseits zufällige Fehler als auch fehlende Messwerte korrigiert. Letzteres erfordert, dass die entsprechenden Oberflächen in zumindest einem Tiefenbild enthalten sind.

In Schritt S6 erfolgt anschließend auf Basis des erzeugten 3D-Modells 17 eine Trennung des Flurförderzeugs 2 und ggf. der das Flurförderzeug bedienenden Person von dem Objekt 1. Nachfolgend werden einige vorteilhafte Ausführungsvarianten hierzu erläutert.

Eine erste Möglichkeit besteht darin, dass die Volumenbestimmungseinrichtung 11 eine Datenbank umfasst, in der 3D-Modelle unterschiedlicher Flurförderzeuge hinterlegt sind. Eine solche Datenbank kann beispielsweise dadurch erzeugt werden, dass ein Flurförderzeug ohne Ladung ein oder mehrere Male durch den Messbereich gefahren wird und die resultierende anhand der Tiefenbilder erzeugte Punktwolke des Flurförderzeugs mit einem eindeutigen, das Flurförderzeug kennzeichnenden Code abgespeichert wird. Der Code des Flurförderzeugs kann dann für die tatsächliche Messung per RFID, Barcode oder einer sonstigen Funklösung erkannt bzw. an die Volumenbestimmungseinrichtung übertragen werden, die dann die für den Code in der Datenbank zuvor hinterlegte Punktwolke ausliest. Anhand dieser ausgelesenen Punktwolke wird die korrespondierende Punktwolke in dem Zielbereich bestimmt, um das Ladegut von dem Flurförderzeug zu trennen.

Alternativ kann die Volumenbestimmungseinrichtung 11 auch ausgeführt sein, die Oberflächenform des Flurförderzeugs in dem erzeugten 3D-Modell mittels der in der Datenbank hinterlegten 3D-Modelle und vorgegebener Identifizierungsmerkmale selbst zu ermitteln, ohne dass ein Identifizierungscode des Flurförderzeugs übertragen werden muss.

Ferner besteht die Möglichkeit, einen optischen Marker bzw. eine Markierung an dem Flurförderzeug 2 anzubringen, der mittels einer zusätzlichen RGB-Kamera erfasst wird, die im Durchgangsbereich vorgesehen ist. Eine besonders vorteilhafte Variante sieht vor, dass eine streifenartige Markierung eingesetzt wird, die beispielsweise einen Meter lang sein kann und schwarz/weiß, schwarz/weiß/schwarz oder schwarz in Kombination mit einem Retro-Reflektor ausgeführt ist.

Diese wird seitlich vertikal am Hubmast beispielsweise eines Staplers angebracht mit einem klar definierten Abstand zur Trennebene, d. h. einer Ebene, die parallel zum Hubmast ist und an der frühestens die Ladung beginnen kann. Anhand der Markierung kann das Flurförderzeug zuverlässig erkannt und von dem Ladegut unterschieden werden.

Nachdem das Flurförderzeug durch eine der vorgenannten Methoden identifiziert wurde, ist das Flurförderzeug und damit dessen Geometrie bekannt und kann folglich in der Punktwolke lokalisiert werden.

Nachfolgend erfolgt eine Trennung des Ladeguts vom Flurförderzeug bzw. die Entfernung jener Punkte der Punktwolke, die nicht das Ladegut repräsentieren.

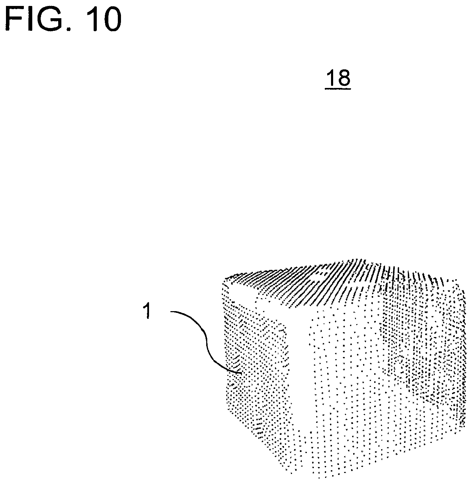

Anschließend wird die dreidimensionale Punktwolke des Ladeguts zu einem 3D-Modell des Ladeguts 1 vervollständigt. Dies ist in Figur 10 illustriert, die beispielhaft ein 3D-Modell 18 des Ladeguts 1 zeigt.

In Schritt S7 erfolgt anschließend die Berechnung des Objektvolumens, was an sich aus dem Stand der Technik bekannt ist. Hierbei wird beispielsweise der kleinste Quader gesucht, der das gesamte Ladegut bzw. die entsprechende Punktwolke umschließt.

Für die vorgenannte Super-Resolution-Verarbeitung können an sich unterschiedliche aus dem Stand der Technik bekannte Super-Resolution-Verfahren eingesetzt werden. Nachfolgend wird lediglich beispielhaft eine besonders vorteilhafte Ausführungsvariante zur Durchführung des Schrittes S5 detailliert beschrieben.

Im Zuge der Datenkombination werden die Tiefenbilder jedes Sensors integriert, d.h. registriert und überlagert - Verfahren, die auch unter den englischen Fachbegriffen image registration und image stacking bekannt sind. Die Integration erfolgt mittels sog. truncated signed distance functions (TSDFs). Dabei handelt es sich um ein Voxelgitter, deren Voxel zwei Werte speichern - die Distanz zur nächsten Oberfläche entlang der Sehstrahlen des Sensors F(p) sowie einer Gewichtung W(p). Die Distanz ist vorzeichenbehaftet; positive Distanzen liegen vom Sensor aus betrachtet vor einer Oberfläche, negative dahinter. Die Gewichtung W(p) entspricht der Konfidenz und ist invers proportional zur Objektdistanz und zum Winkel zwischen den Sichtstrahlen und den Normalvektoren der Oberflächen. Die Transformation von einem Tiefenbild in eine TSDF erfolgt mittels Projektion der Voxelkoordinaten p auf die Bildebene.

Die Integration mittels TSDFs hat zwei Hauptvorteile gegenüber anderen Verfahren. Erstens werden so Messfehler durch zufällige Abweichungen verlässlich korrigiert, da die Integration der Daten optimal im Sinne der kleinsten Fehlerquadrate ist. Zweitens lassen sich so Drifts vermeiden, die z. B. bei einer inkrementellen paarweisen Registrierung von Punktwolken auftreten und das Endergebnis negativ beeinflussen können.

Die Integration der Information eines Tiefenbildes *Dₖ* in das globale 3D-Modell erfolgt durch Kombination der entsprechenden TSDFs *Tₖ* der Einzelbilder mit der globalen TSDF *T*. Da sich die Objektposition in den einzelnen Bildern der Bildsequenz stets ändert, muss diese zuerst kompensiert werden. Zu diesem Zweck werden die relevanten Bereiche von *Dₖ* in eine Punktwolke transformiert. Eine weitere Punktwolke, die mittels eines sog. Raycasting aus *T* synthetisiert wird, dient als Referenz. Der Versatz des Objektes zum Zeitpunkt *k* wird durch Registrierung dieser Punktwolken ermittelt. Zur Registrierung wird der bekannte Largest-Common-Pointset (LCP)-Algorithmus verwendet. Nach der Korrektur des Objektversatzes überlappen sich *Tₖ* und *T* und können mittels gewichteter Mittelung der Voxel kombiniert werden.

Zur Initialisierung von T wird jenes Tiefenbild verwendet, das die relevanten Objekte zur Gänze und aus der geringsten Entfernung zu den Sensoren zeigt. Anschließend werden obige Schritte für jedes zu integrierende Tiefenbild ausgeführt.

Die danach aus T synthetisierte Punktwolke entspricht der kombinierten Information.

Zu weiteren Details der Integration mittels sog. *truncated signed distance functions (TSDFs)* wird auf nachfolgende Literatur verwiesen: P.J. Besl und Neil D. McKay. "A method for registration of 3-D shapes". IEEE Trans. Pattern Analysis and Machine Intelligence 14.2 (1992), S. 239-256; Brian Curless und Marc Levoy. "A volumetric method for building complex models from range images". Proceedings of the 23rd annual conference on Computer graphics and interactive techniques. ACM. 1996, S. 303-312; sowie Richard A Newcombe u. a. "KinectFusion: Real-time dense surface mapping and tracking". 10th IEEE international symposium on mixed and augmented reality (ISMAR). IEEE. 2011, S. 127-136.

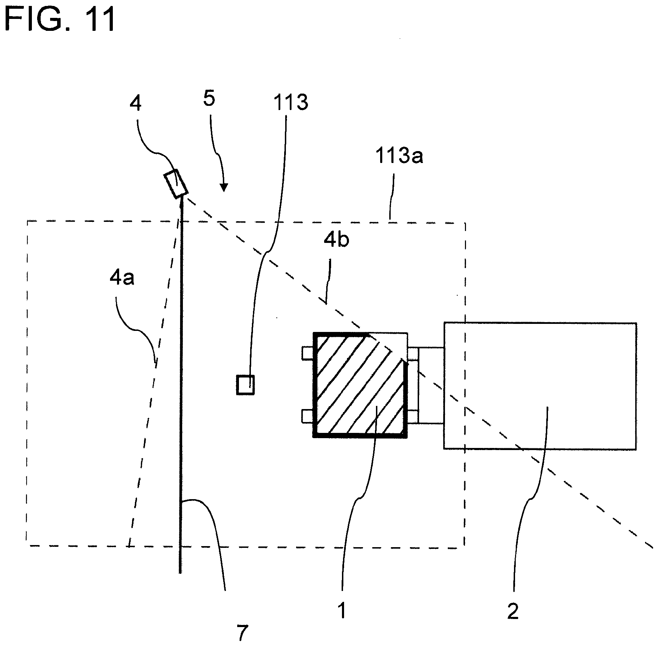

Figur 11 illustriert eine alternative Anordnung der beiden Tiefenbildsensoren gemäß einer weiteren Ausführungsvariante in einer Draufsicht. In dieser Ausführungsvariante ist eine Tiefenbildkamera 4, wie in Figur 1, an einem äußeren oberen Bereich des Ladetors 7 angeordnet, mit der das sich nähernde Flurförderzeug 2 und das Objekt 1 von seitlich oben erfasst wird. Der Blickwinkel der Tiefenbildkamera 4 ist somit schräg nach vorne und schräg nach unten gerichtet. Die zweite Tiefenbildkamera 113 ist jedoch in einem mittleren oberen Bereich des Durchgangsbereichs 5 angeordnet, mit der Blickrichtung senkrecht nach unten. Die gestrichelten Linien 4a und 4b bzw. 113a kennzeichnen wiederum die Grenzen des Sichtkegels der Tiefenbildkameras 4 bzw. 113.

Die Kamera 4 ist somit so am oberen Rand des Durchgangsbereich angeordnet, dass das Flurförderzeug 2 mit dem Objekt 1 beim Passieren des Durchgangsbereichs 5 nicht direkt unterhalb, sondern seitlich bzw. seitlich unterhalb an der Kamera 4 vorbeibewegt wird, während die zweite Kamera 113a mittig oben am Durchgangsbereich 7 angeordnet ist, mit dem Sichtkegel senkrecht nach unten, so dass das Objekt beim Passieren des Durchgangsbereichs von gerade oben erfasst wird.

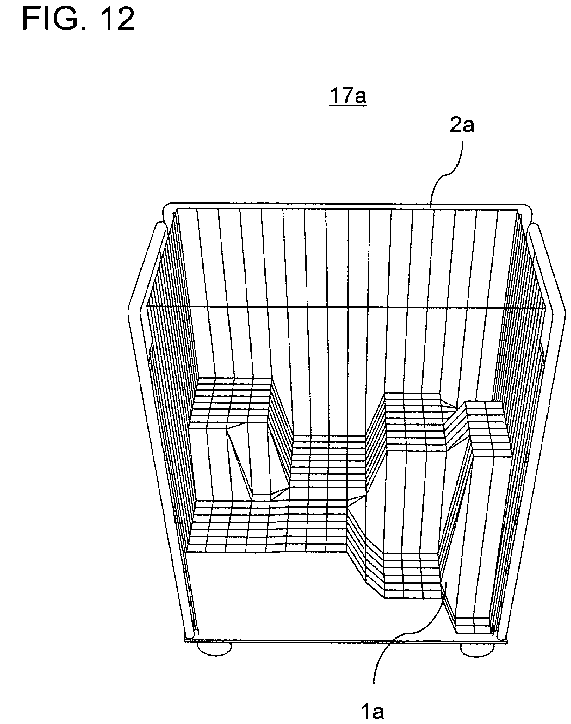

Figur 12 zeigt ein 3D-Modell 17a gemäß einer weiteren Ausführungsform. Gemäß dieser Ausführungsform ist das Flurförderzeug ein fahrbares Transportbehältnis, das die transportierte Ladung zumindest teilweise umschließt, vorliegend ein Rollwagen oder Gitterwagen 2a. Die Ladung des Rollwagens besteht aus einer Reihe aufeinander gestapelter Pakete und ist in dem 3d-Modell 17a mit dem Bezugszeichen 1a gekennzeichnet.

Gemäß dieser Ausführungsform wird die Vorrichtung und das Verfahren zur Volumenbestimmung dazu verwendet, eine Füllstandsensorik von Gitterwagen bzw. Rollwagen 2a zu realisieren.

Hierbei wird, wie vorstehend beschrieben, aus den Bilddaten zweier Tiefenbildsensoren das 3D-Modell 17a berechnet, um die Ladung 1a von dem Transportbehältnis 2a unterscheiden zu können. Es wird allerdings nicht, wie vorstehend in Schritt S6 der Figur 5 beschrieben, ein Gabelstapler aus der Szene herausgerechnet und dann das Palettenvolumen bestimmt. Vielmehr wird ein Füllstand des fahrbaren Transportbehältnisses 2a ermittelt. Für die Berechnung muss wieder das (in diesem Fall teilweise die Ladung umschließende) Transportbehältnis 2a erkannt werden und von der Ladung getrennt oder abgegrenzt werden. Als Ergebnis kann entweder die Länge, Höhe und Breite der Ladung 1a und das Volumen der Ladung bestimmt werden. Alternativ kann auch ein Prozentwert im Vergleich zu der Größe des Transportbehältnisses, sprich die Auslastung oder ein Füllstand, als Maß für das Volumen der Ladung bestimmt und ausgegeben werden.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Zusätzlich können viele Modifikationen ausgeführt werden, ohne den zugehörigen Bereich zu verlassen. Folglich soll die Erfindung nicht auf die offenbarten Ausführungsbeispiele begrenzt sein, sondern die Erfindung soll alle Ausführungsbeispiele umfassen, die in den Bereich der beigefügten Patentansprüche fallen.

## Patentansprüche

1. Vorrichtung (10) zur Volumenbestimmung eines durch ein Flurförderzeug (2) bewegten Objekts (1), **gekennzeichnet durch**
einen ersten Tiefenbildsensor (3) und einen zweiten Tiefenbildsensor (4), die so angeordnet sind, dass das Objekt (1) beim Passieren des Durchgangsbereichs (5) aus zwei unterschiedlichen Richtungen erfassbar ist, wobei die Vorrichtung (10) ausgeführt ist, mit jedem der Tiefenbildsensoren (3, 4) eine Sequenz von Einzelbildern in einer ersten Auflösung zu erzeugen, wodurch das Flurförderzeug (2) und das Objekt (1) aus unterschiedlichen Blickwinkeln beim Passieren des Durchgangsbereichs erfasst werden; und
eine Volumenbestimmungseinrichtung (11), die ausgeführt ist, die Sequenzen der Einzelbilder in der ersten Auflösung des ersten Tiefenbildsensors (3) und des zweiten Tiefenbildsensors (4) einer Super-Resolution-Verarbeitung (15a-15c) zu unterziehen, um ein das Flurförderzeug (2) und das Objekt (1) umfassendes 3D-Modell (17) in einer zweiten Auflösung, die höher als die erste Auflösung ist, zu erstellen und das Volumen des Objekts (1) auf Basis des erzeugten 3D-Modells (17) zu bestimmen.

2. Vorrichtung nach Anspruch 1, **dadurch gekennzeichnet, dass** die zwei Tiefenbildsensoren (3, 4) so an dem Durchgangsbereich (5) angeordnet sind, dass ein vorderer Bereich (1a), ein oberer Bereich (1b), ein erster seitlicher Bereich (1c) und ein zum ersten seitlichen Bereich gegenüberliegender zweiter seitlicher Bereich (1d) einer Oberflächenform des Objekts (1) erfassbar sind, wobei mit dem ersten Tiefenbildsensor (3) zumindest der erste seitliche Bereich (1c) erfassbar ist und mit dem zweiten Tiefenbildsensor (4) zumindest der zweite seitliche Bereich (1d) erfassbar ist.

3. Vorrichtung nach Anspruch 1 oder 2, **dadurch gekennzeichnet,**
(a) **dass** die zwei Tiefenbildsensoren (3, 4) so am Durchgangsbereich (5) angeordnet und ausgerichtet sind, dass das bewegte Objekt (1) von schräg oben erfassbar ist; und/oder
(b) **dass** die zwei Tiefenbildsensoren (3, 4) so am Durchgangsbereich (5) angeordnet sind, dass das Objekt (1) beim Passieren des Durchgangsbereichs (5) unterhalb und zwischen den zwei Tiefenbildsensoren (3, 4) vorbeibewegt wird.

4. Vorrichtung nach einem der vorhergehenden Ansprüche, **dadurch gekennzeichnet, dass** die Volumenbestimmungseinrichtung (11) ausgeführt ist, durch Ermittlung von in den Bildsequenzen bewegten Elementen einen das Flurförderzeug (2) und das Objekt (1) umfassenden Zielbereich (RoI) in den Einzelbildern zu bestimmen, für den die Super-Resolution-Verarbeitung durchgeführt wird,wobei bewegte Elemente anhand derjenigen Pixelbereiche ermittelt werden, für die sich eine Distanzinformation gegenüber einem Vorgängerbild oder gegenüber einem Hintergrundbild, welches das Flurförderzeug und das Objekt nicht enthält, verändert.

5. Vorrichtung nach Anspruch 4, **dadurch gekennzeichnet, dass** für die Bestimmung des Zielbereichs (RoI) nur diejenigen bewegten Elemente verwendet werden, die eine vorbestimmte Mindestgröße überschreiten und/oder sich entlang einer vorgegebenen Richtung oder Trajektorie bewegen.

6. Vorrichtung nach einem der vorhergehenden Ansprüche, **dadurch gekennzeichnet, dass** für die Super-Resolution-Verarbeitung zuerst Daten der Sequenz von Einzelbildern des ersten Tiefenbildsensors (3) zeitlich kombiniert werden und Daten der Sequenz von Einzelbildern des zweiten Tiefenbildsensors (4) zeitlich kombiniert werden und anschließend die zeitlich kombinierten Bilddaten des ersten Tiefenbildsensors (3) mit den zeitlich kombinierten Bilddaten des zweiten Tiefenbildsensors (4) räumlich kombiniert werden.

7. Vorrichtung nach einem der vorhergehenden Ansprüche, **dadurch gekennzeichnet, dass** die Volumenbestimmungseinrichtung (11) ausgeführt ist, bei der Super-Resolution-Verarbeitung in Einzelbildern fehlende oder fehlerhafte Bildinformationen bei der Erstellung des 3D-Modells (17) zu ergänzen und/oder zu korrigieren.

8. Vorrichtung nach einem der vorhergehenden Ansprüche **dadurch gekennzeichnet,**
(a) **dass** die Achsen der Sichtkegel der zwei Tiefenbildsensoren einander zugeneigt sind; und/oder
(b) **dass** ein Sichtkegel zumindest eines Tiefenbildsensors so ausgeführt ist, dass eine Rückseite (1e) des Objekts beim Passieren des Durchgangsbereichs (5) zumindest bei einem Wiederaustreten des Objekts (1) aus dem Sichtkegel kurzzeitig erfassbar ist.

9. Vorrichtung nach einem der vorhergehenden Ansprüche, **dadurch gekennzeichnet, dass** die Volumenbestimmungseinrichtung (11) ausgeführt ist, eine am Flurförderzeug (2) an einer vorbestimmten, durch das Objekt (1) nicht verdeckbaren Stelle befestigte Markierung zur Unterscheidung des Objekts (1) von dem Flurförderzeug (2) zu verwenden.

10. Vorrichtung nach Anspruch 9, **dadurch gekennzeichnet,**
(a) dass die Markierung seitlich zur Fahrtrichtung an einem Hubmast des Flurförderzeugs (2) angeordnet ist und vorzugsweise streifenartig ausgeführt ist; und
(b) dass die Volumenbestimmungseinrichtung (11) eingerichtet ist,
(b1) anhand der erfassten Markierung eine Neigung des Hubmastes und eine zum Hubmast parallele Trennebene sowie eine hierzu senkrechte Bodenebene des Ladeguts zu bestimmen, wobei die Trennebene und die Bodenebene einen möglichen Aufenthaltsort des Objekts begrenzen; und/oder
(b2) anhand der erfassten Markierung eine relativ zum Flurförderzeug ausgeführte Vertikalbewegung des Objekts zu bestimmen.

11. Vorrichtung nach einem der Ansprüche 9 bis 10, **gekennzeichnet durch** eine synchronisierte RGB-Kamera zur Erkennung der Markierung.

12. Vorrichtung nach einem der Ansprüche 1 bis 8, **dadurch gekennzeichnet,**
(a) **dass** die Vorrichtung ausgeführt ist, eine Sequenz von Einzelbildern des unbeladenen Flurförderzeugs (2) bei einer Fahrt durch den Durchgangsbereich (5) zu erfassen; und
(b) **dass** die Volumenbestimmungseinrichtung (11) ausgeführt ist, anhand dieser Sequenz von Einzelbildern eine Oberflächenform des Flurförderzeugs (2) zu ermitteln, die zur Unterscheidung einer Oberflächenform des Objekts (1) von der Oberflächenform des Flurförderzeugs (2) in dem 3D-Modell (17) verwendet wird.

13. Vorrichtung nach einem der Ansprüche 1 bis 8, **gekennzeichnet durch** eine Datenbank, in der 3D-Modelle unterschiedlicher Flurförderzeuge hinterlegt sind, wobei die Volumenbestimmungseinrichtung zur Unterscheidung einer Oberflächenform des Objekts von der Oberflächenform des Flurförderzeugs derart ausgeführt ist, dass die Oberflächenform des Flurförderzeugs in dem 3D-Modell mittels der hinterlegten 3D-Modelle und vorgegebener Identifizierungsmerkmale ermittelt werden kann.

14. Vorrichtung nach einem der vorhergehenden Ansprüche, **dadurch gekennzeichnet,**
(a) **dass** der erste Tiefenbildsensor (3) und der zweite Tiefenbildsensor (4) nach einem pixelbildgebenden Verfahren wie etwa dem Structured-Light-Prinzip und/oder dem Time-of-Flight-Prinzip und/oder dem Stereo-Vision-Prinzip arbeiten; und/oder
(b) **dass** der erste Tiefenbildsensor (3) und der zweite Tiefenbildsensor (4) in einer Höhe von 2 bis 4 Metern, vorzugsweise in einer Höhe von 2,5 bis 3 Metern, über dem Boden angeordnet sind und/oder 2,5 bis 4 Meter quer zur Bewegungsrichtung des Objekts (1) im Durchgangsbereich (5) voneinander beabstandet angeordnet sind.

15. Vorrichtung nach einem der vorhergehenden Ansprüche, **dadurch gekennzeichnet,**
(a) **dass** zur Erstellung des 3D-Modells (17)des Objekts (1) ausschließlich Tiefenbilddaten des ersten Tiefenbildsensors (3) und des zweiten Tiefenbildsensors (4) verwendet werden;
oder
(b) **dass** ein oder zwei zusätzliche Tiefenbildsensoren in einem unteren Abschnitt des Durchgangsbereichs angeordnet sind;
und/oder
(c) **dass** ein zusätzlicher Tiefenbildsensor vorgesehen ist, der zur Detektion einer Hinterkante und/oder Rückseite des Objekts im Wesentlichen vertikal nach unten ausgerichtet ist.

16. Vorrichtung nach einem der vorhergehenden Ansprüche, **dadurch gekennzeichnet,**
(a) **dass** das Objekt (1) eine Ladung oder ein Ladegut eines Flurförderfahrzeugs ist; und/oder
(b) **dass** das Flurförderzeug (2) ein Gabelstapler, Elektrohubwagen, Niederhubwagen, Hochhubwagen, Handhubwagen, Kommissionierwagen, Schubmaststapler, Plattformwagen, Rollwagen, Gitterwagen oder dergleichen ist; und/oder
(c) **dass** der Durchgangsbereich (5) ein Verladetor, eine Verladepassage, ein Industrietor, ein Garagentor, ein Innentor, eine Vorsatzschleuse, ein Tunnel, ein Portal oder ein markierter Wegbereich oder dergleichen ist.

17. Verfahren zur Volumenbestimmung eines durch ein Flurförderzeug (2) bewegten Objekts (1), **gekennzeichnet durch** die Schritte:
(a) Anordnen eines ersten Tiefenbildsensors (3) und eines zweiten Tiefenbildsensors (4) an einem Durchgangsbereich (5) des bewegten Objekts (1) derart, dass das Objekt (1) beim Passieren des Durchgangsbereichs (5) aus zwei unterschiedlichen Richtungen erfassbar ist;
(b) Erzeugen einer Sequenz von Einzelbildern in einer ersten Auflösung mit jedem der Tiefenbildsensoren (3, 4), die das Flurförderzeug (2) und das Objekt (1) aus unterschiedlichen Blickwinkeln beim Passieren des Durchgangsbereichs (5) zeigen;
(c) Erzeugen eines das Flurförderzeug (2) und das Objekt (1) umfassenden 3D-Modells (17) in einer zweiten Auflösung, die höher als die erste Auflösung ist, durch Durchführen einer Super-Resolution-Verarbeitung (15a-15c) auf Basis der Sequenzen der Einzelbilder in der ersten Auflösung des ersten Tiefenbildsensors (3) und des zweiten Tiefenbildsensors (4); und
(d) Bestimmen des Volumens des Objekts (1) auf Basis des erzeugten 3D-Modells (17).

## Claims

1. A device (10) for determining the volume of an object (1) moved by an industrial truck (2), **characterized in**
a first depth image sensor (3) and a second depth image sensor (4), which are arranged such that the object (1) can be sensed from two different directions as it passes through the passage region (5), wherein
the device (10) is designed to produce a sequence of single images in a first resolution with each of the depth image sensors (3, 4), whereby the industrial truck (2) and the object (1) are sensed from different viewing angles as they pass through the passage region; and
a volume-determining apparatus (11), which is designed to subject the sequences of the single images in the first resolution of the first depth image sensor (3) and of the second depth image sensor (4) to super resolution processing so as to create a 3-D model (17) comprising the industrial truck (2) and the object (1) in a second resolution that is higher than the first resolution, and to determine the volume of the object (1) on the basis of the 3-D model (17) produced.

2. The device in accordance with claim 1,
**characterised in that**,
the two depth image sensors (3, 4) are arranged in the passage region (5) such that a forward region (1a), an upper region (1b), a first lateral region (1c) and a second lateral region (1d) located opposite to the first lateral region of a surface shape of the object (1) can be sensed, wherein
with the first depth image sensor (3) at least the first lateral region (1c) can be sensed, and with the second depth image sensor (4) at least the second lateral region (1d) can be sensed.

3. The device in accordance with claim 1 or 2,
**characterised in that**,
(a) the two depth image sensors (3, 4) are arranged and aligned in the passage region (5) such that the moving object (1) can be sensed obliquely from above, and/or
(b) the two depth image sensors (3, 4) are arranged in the passage region (5) such that the object (1), as it passes through the passage region (5), moves past underneath and between the two depth image sensors (3, 4).

4. The device in accordance with one of the preceding claims,
**characterised in that**,
the volume-determining apparatus (11) is designed to determine a region of interest (RoI) in the single images comprising the industrial truck (2) and the object (1), for which super resolution processing is executed by ascertaining elements moving in the image sequences, wherein
moving elements are ascertained on the basis of those pixel regions for which an item of distance information alters relative to a predecessor image or relative to a background image that does not contain the industrial truck and the object.

5. The device in accordance with claim 4,
**characterised in that**,
for the determination of the region of interest(RoI) only those moving elements are used that exceed a predetermined minimum size, and/or move along a prescribed direction or trajectory.

6. The device in accordance with one of the preceding claims,
**characterised in that**,
for the super resolution processing firstly data from the sequence of single images of the first depth image sensor (3) are combined in time, and data from the sequence of single images of the second depth image sensor (4) are combined in time, and the time-wise combined image data of the first depth image sensor (3) are then spatially combined with the time-wise combined image data of the second depth image sensor (4).

7. The device in accordance with one of the preceding claims,
**characterised in that**,
the volume-determining apparatus (11) is designed so as to supplement and/or to correct image information that is missing or subject to errors in the single images when creating the 3-D model in the super resolution processing.

8. The device in accordance with one of the preceding claims,
**characterised in that**,
(a) the axes of the visual cones of the two depth image sensors are inclined towards one another; and/or
(b) a visual cone of at least one depth image sensor is designed such that a rear face (1e) of the object, as it passes through the passage region (5), can be sensed for a short period, at least as the object (1) is again exiting from the visual cone.

9. The device in accordance with one of the preceding claims,
**characterised in that**,
the volume-determining apparatus (11) is designed so as to use a predetermined labelling on the industrial truck, attached at a point that cannot be concealed by the object (1), for purposes of demarcating the object (1) from the industrial truck (2).

10. The device in accordance with claim 9,
**characterised in that**,
(a) the labelling is arranged laterally with respect to the direction of travel on a lift mast of the industrial truck (2), and is preferably designed in the form of strips; and
(b) the volume-determining apparatus (11) is set up,
(b1) on the basis of the sensed labelling to determine an inclination of the lift mast, and a demarcation plane parallel to the lift mast, together with the base plane of the load at right angles to the latter, wherein the demarcation plane and the base plane bound a possible location of the object; and/or
(b2) on the basis of the sensed labelling to determine a vertical movement of the object executed relative to the industrial truck.

11. The device in accordance with one of the claims 9 to 10, **characterised by**
a synchronised RGB camera for purposes of detecting the labelling.

12. The device in accordance with one of the claims 1 to 8, **characterised in that**,
(a) the device is designed to sense a sequence of single images of the unloaded industrial truck (2) as it travels through the passage region (5); and
(b) the volume-determining apparatus (11) is designed, on the basis of this sequence of single images, to determine a surface shape of the industrial truck (2), which is used for purposes of demarcating a surface shape of the object (1) from the surface shape of the industrial truck (2) in the 3-D model (17).

13. The device in accordance with one of the claims 1 to 8, **characterised by**
a database, in which 3-D models of various industrial trucks are stored, wherein for purposes of demarcating a surface shape of the object from the surface shape of the industrial truck, the volume-determining apparatus is designed such that the surface shape of the industrial truck in the 3-D model can be ascertained by means of the stored 3-D models and prescribed identification features.

14. The device in accordance with one of the preceding claims, **characterised in that**,
(a) the first depth image sensor (3) and the second depth image sensor (4) operate in accordance with a method providing a pixel image, such as for example, the structured light principle, and/or the time of flight principle, and/or the stereo vision principle; and/or
(b) the first depth image sensor (3) and the second depth image sensor (4) are arranged at a height above the floor of 2 to 4 metres, preferably at a height of 2.5 to 3 metres, and/or are arranged spaced apart from one another by 2.5 to 4 metres transverse to the direction of movement of the object (1) in the passage region (5).

15. The device in accordance with one of the preceding claims, **characterised in that**,
(a) for purposes of creating the 3-D model (17) of the object (1) depth image data from the first depth image sensor (3) and the second depth image sensor (4) are exclusively used; or
(b) one or two additional depth image sensors are arranged in a lower section of the passage region; and/or
(c) an additional depth image sensor is provided, which for purposes of detecting a rear edge and/or rear face of the object is aligned essentially vertically downwards.

16. The device in accordance with one of the preceding claims, **characterised in that**,
(a) the object (1) is a shipment or goods loaded onto an industrial truck; and/or
(b) the industrial truck is a forklift truck, an electric lift truck, a low-lift truck, a high-lift truck, a hand pallet truck, an order-picking truck, a high-reach forklift truck, a platform truck, a trolley, a wire mesh cart, or similar; and/or
(c) the passage region (5) is a loading gate, a loading passage, an industrial door, a garage door, an interior door, a loading bay, a tunnel, a portal, a marked path section or similar.

17. A method for determining the volume of an object (1) moved by an industrial truck (2), **characterized by** the steps:
(a) arrangement of a first depth image sensor (3) and a second depth image sensor (4) in a passage region (5) of the moving object (1), such that the object (1) can be sensed from two different directions as it passes through the passage region (5) ;
(b) production of a sequence of single images in a first resolution with each of the depth image sensors (3, 4), which show the industrial truck (2) and the object (1) from different viewing angles as the latter pass through the passage region (5) ;
(c) production of a 3-D model (17) comprising the industrial truck (2) and the object (1) with a second resolution, which is higher than the first resolution, by executing super resolution processing (15a-15c) on the basis of the sequences of single images in a first resolution of the first depth image sensor (3) and the second depth image sensor (4); and
(d) determination of the volume of the object (1) on the basis of the 3-D model (17) produced.

## Revendications

1. Dispositif (10) de détermination du volume d'un objet (1) déplacé par un chariot de manutention au sol (2), **caractérisé par**
un premier capteur d'image de profondeur (3) et un deuxième capteur d'image de profondeur (4), qui sont agencés de telle sorte que l'objet (1) peut être détecté lors de la traversée de la zone de passage (5) depuis deux directions différentes, dans lequel le dispositif (10) est réalisé pour générer avec chacun des capteurs d'image de profondeur (3, 4) une séquence d'images individuelles dans une première résolution, ce qui permet de détecter le chariot de manutention au sol (2) et l'objet (1) sous différents angles lors de la traversée de la zone de passage ; et
un équipement de détermination de volume (11), qui est réalisé pour soumettre les séquences des images individuelles dans la première résolution du premier capteur d'image de profondeur (3) et du deuxième capteur d'image de profondeur (4) à un traitement de super-résolution (15a-15c) afin de créer un modèle 3D (17), comportant le chariot de manutention au sol (2) et l'objet (1), dans une deuxième résolution, qui est supérieure à la première résolution, et de déterminer le volume de l'objet (1) sur la base du modèle 3D (17) généré.

2. Dispositif selon la revendication 1, **caractérisé en ce que** les deux capteurs d'image de profondeur (3, 4) sont agencés au niveau de la zone de passage (5) de telle sorte qu'une zone avant (1a), une zone supérieure (1b), une première zone latérale (1c) et une deuxième zone latérale (1d) opposée à la première zone latérale d'une forme de surface de l'objet (1) peuvent être détectées, dans lequel avec le premier capteur d'image de profondeur (3), au moins la première zone latérale (1c) peut être détectée et avec le deuxième capteur d'image de profondeur (4), au moins la deuxième zone latérale (1d) peut être détectée.

3. Dispositif selon la revendication 1 ou 2, **caractérisé en ce**
(a) **que** les deux capteurs d'image de profondeur (3, 4) sont agencés et orientés au niveau de la zone de passage (5) de telle sorte que l'objet déplacé (1) est détecté en biais depuis le haut ; et/ou
(b) **que** les deux capteurs d'image de profondeur (3, 4) sont agencés au niveau de la zone de passage (5) de telle sorte que l'objet (1) est déplacé lors de la traversée de la zone de passage (5) sous et entre les deux capteurs d'image de profondeur (3, 4).

4. Dispositif selon l'une quelconque des revendications précédentes, **caractérisé en ce que** l'équipement de détermination de volume (11) est réalisé pour déterminer dans les images individuelles une zone cible (RoI) comportant le chariot de manutention au sol (2) et l'objet (1) par détermination d'éléments déplacés dans les séquences d'images, pour laquelle le traitement de super-résolution est effectué, dans lequel des éléments déplacés sont déterminés à l'aide des pixels pour lesquels une information de distance change par rapport à une image précédente ou par rapport à une image de fond, qui ne contient pas le chariot de manutention au sol et l'objet.

5. Dispositif selon la revendication 4, **caractérisé en ce que** seuls les éléments déplacés, qui dépassent une taille minimum prédéterminée et/ou se déplacent le long d'une direction ou trajectoire prédéfinie, sont utilisés pour la détermination de la zone cible (RoI).

6. Dispositif selon l'une quelconque des revendications précédentes, **caractérisé en ce que** pour le traitement de super-résolution, les données de la séquence d'images individuelles du premier capteur d'image de profondeur (3) sont d'abord combinées dans le temps et les données de la séquence d'images individuelles du deuxième capteur d'image de profondeur (4) sont combinées dans le temps et ensuite les données d'images combinées dans le temps du premier capteur d'image de profondeur (3) sont combinées dans l'espace avec les données d'images combinées dans le temps du deuxième capteur d'image de profondeur (4).

7. Dispositif selon l'une quelconque des revendications précédentes, **caractérisé en ce que** l'équipement de détermination de volume (11) est réalisé pour compléter et/ou corriger des informations d'image manquantes ou erronées dans des images individuelles lors du traitement de super-résolution lors de la création du modèle 3D (17).

8. Dispositif selon l'une quelconque des revendications précédentes, **caractérisé en ce**
(a) **que** les axes des cônes de vision des deux capteurs d'image de profondeur sont inclinés l'un vers l'autre ; et/ou
(b) **qu'**un cône de vision d'au moins un capteur d'image de profondeur est réalisé de telle sorte qu'une face arrière (1e) de l'objet est détectée brièvement lors de la traversée de la zone de passage (5) au moins lors d'une sortie de l'objet (1) du cône de vision.

9. Dispositif selon l'une quelconque des revendications précédentes, **caractérisé en ce que** l'équipement de détermination de volume (11) est réalisé pour utiliser un marquage fixé sur le chariot de manutention au sol (2) à un endroit prédéterminé, ne pouvant pas être recouvert pas l'objet (1) pour la distinction de l'objet (1) du chariot de manutention au sol (2).

10. Dispositif selon la revendication 9, **caractérisé en ce**
(a) que le marquage est agencé latéralement au sens de marche au niveau d'un mât de levage du chariot de manutention au sol (2) et est réalisé de préférence en forme de bande ; et
(b) que l'équipement de détermination de volume (11) est aménagé,
(b1) pour déterminer à l'aide du marquage détecté, une inclinaison du mât de levage et un plan de séparation parallèle au mât de levage ainsi qu'un plan de sol perpendiculaire à celui-ci, dans lequel le plan de séparation et le plan de sol déterminent un possible lieu de séjour de l'objet ; et/ou
(b2) pour déterminer à l'aide du marquage détecté, un déplacement vertical de l'objet réalisé par rapport au chariot de manutention au sol.

11. Dispositif selon l'une quelconque des revendications 9 à 10, **caractérisé par** une caméra RGB synchronisée pour la détection du marquage.

12. Dispositif selon l'une quelconque des revendications 1 à 8, **caractérisé en ce**
(a) **que** le dispositif est réalisé pour détecter une séquence d'images individuelles du chariot de manutention au sol non chargé (2) lors d'une traversée par la zone de passage (5) ; et
(b) **que** l'équipement de détermination de volume (11) est réalisé à l'aide de cette séquence d'images individuelles pour déterminer une forme de surface du chariot de manutention au sol (2), qui est utilisée pour la distinction d'une forme de surface de l'objet (1) par rapport à la forme de surface du chariot de manutention au sol (2) dans le modèle 3D (17).

13. Dispositif selon l'une quelconque des revendications 1 à 8, **caractérisé par** une base de données, dans laquelle des modèles 3D de différents chariots de manutention au sol sont enregistrés, dans lequel l'équipement de détermination de volume est réalisé pour la distinction d'une forme de surface de l'objet par rapport à la forme de surface du chariot de manutention au sol de telle sorte que la forme de surface du chariot de manutention au sol peut être déterminée dans le modèle 3D au moyen des modèles 3D enregistrés et de caractéristiques d'identification prédéfinies.

14. Dispositif selon l'une quelconque des revendications précédentes, **caractérisé en ce**
(a) **que** le premier capteur d'image de profondeur (3) et le deuxième capteur d'image de profondeur (4) fonctionnent selon un procédé formant des pixels comme par exemple le principe de lumière structurée et/ou le principe de temps de vol et/ou le principe de vision stéréo ; et/ou
(b) **que** le premier capteur d'image de profondeur (3) et le deuxième capteur d'image de profondeur (4) sont agencés à distance l'un de l'autre à une hauteur de 2 à 4 mètres, de préférence à une hauteur de 2,5 à 3 mètres, au-dessus du sol et/ou de 2,4 à 4 mètres transversalement au sens de déplacement de l'objet (1) dans la zone de passage (5)

15. Dispositif selon l'une quelconque des revendications précédentes, **caractérisé en ce**
(a) **qu'**exclusivement des données d'image de profondeur du premier capteur d'image de profondeur (3) et du deuxième capteur d'image de profondeur (4) sont utilisées pour la création du modèle 3D (17) de l'objet (1) ;
(b) **qu'**un ou deux capteurs d'image de profondeur supplémentaires sont agencés dans une section inférieure de la zone de passage ; et/ou
(c) **qu'**un capteur d'image de profondeur supplémentaire est prévu, qui est orienté sensiblement verticalement vers le bas pour la détection d'une arête arrière et/ou face arrière de l'objet.

16. Dispositif selon l'une quelconque des revendications précédentes, **caractérisé en ce**
(a) **que** l'objet (1) est une cargaison ou un chargement d'un chariot de manutention au sol ; et/ou
(b) **que** le chariot de manutention au sol (2) est un chariot élévateur à fourches, un transpalette électrique, un transpalette à petite levée, un transpalette à grande levée, un transpalette manuel, un chariot de préparation de commandes, un chariot élévateur à mât, un chariot à plate-forme, un chariot à roulettes, un chariot grillagé ou similaire ; et/ou
(c) **que** la zone de passage (5) est une porte de transbordement, un passage de transbordement, une porte industrielle, une porte de garage, une porte intérieure, un abri de quai, un tunnel, un portail ou une zone de course marquée, ou similaire.

17. Procédé de détermination du volume d'un objet (1) déplacé par un chariot de manutention au sol (2), **caractérisé par** les étapes de :
(a) agencement d'un premier capteur d'image de profondeur (3) et d'un deuxième capteur d'image de profondeur (4) au niveau d'une zone de passage (5) de l'objet déplacé (1) de telle manière que l'objet (1) peut être détecté lors de la traversée de la zone de passage (5) depuis deux directions différentes ;
(b) génération d'une séquence d'images individuelles dans une première résolution avec chacun des capteurs d'image de profondeur (3, 4), qui montrent le chariot de manutention au sol (2) et l'objet (1) sous différents angles lors de la traversée de la zone de passage (5) ;
(c) génération d'un modèle 3D (17), comportant le chariot de manutention au sol (2) et l'objet (1), dans une deuxième résolution, qui est supérieure à la première résolution, par réalisation d'un traitement de super-résolution (15a-15c) sur la base des séquences d'images individuelles dans la première résolution du premier capteur d'image de profondeur (3) et du deuxième capteur d'image de profondeur (4) ; et
(d) détermination du volume de l'objet (1) sur la base du modèle 3D (17) généré.
